# EUROPÄISCHE PATENTSCHRIFT

(11) **EP 2 599 661 B1**
(45) Veröffentlichungstag und Bekanntmachung des Hinweises auf die Patenterteilung: **05.10.2016**
(21) Anmeldenummer: 12194557.0
(22) Anmeldetag: 28.11.2012
(51) Int. Cl.: B60N 2/38, B60N 2/46

(54) **Fahrzeugsitz und Nutzfahrzeug**
Vehicle seat and commercial vehicle
Siège de véhicule et véhicule utilitaire

(30) Priorität: 30.11.2011 DE 102011055895; 30.11.2011 DE 102011055897; 14.05.2012 DE 102012104184
(43) Veröffentlichungstag der Anmeldung: 05.06.2013
(73) Patentinhaber: GRAMMER AG, 92224 Amberg (DE)
(72) Erfinder: Bühlmeyer, Katja, 92281 Königstein (DE); Übelacker, Roland, 92536 Pfreimd (DE); Schustjew, Sergej, 92237 Sulzbach-Rosenberg (DE)
(74) Vertreter: Hannke, Christian

(56) Entgegenhaltungen:
- WO-A1-03/068556
- DE-A1- 3 046 049
- DE-A1-102006 028 453
- DE-A1-102010 009 526
- GB-A- 2 277 869

## Beschreibung

Die Erfindung betrifft einen Fahrzeugsitz mit einem Sitzteil, mit einem Rückenlehnenteil und mit einem Seitenteil, insbesondere einem Armlehnenteil, zum gemeinsamen Stützen eines Fahrzeugführers in seiner Sitzposition auf dem Fahrzeugsitz.

Darüber hinaus betrifft die Erfindung ein Nutzfahrzeug, insbesondere ein landwirtschaftliches Nutzfahrzeug, mit einem Fahrzeugsitz für einen Fahrzeugführer.

Gattungsgemäße Fahrzeugsitze insbesondere für Nutzfahrzeuge und speziell für landwirtschaftliche Nutzfahrzeuge sind aus dem Stand der Technik, z.B. aus der DE102006028453A bekannt.

Insbesondere Fahrzeugführer von landwirtschaftlichen Nutzfahrzeugen nehmen bei ihrer Arbeit mit diesen landwirtschaftlichen Nutzfahrzeugen und daran angehängten Arbeitsgeräten oftmals über einen längeren Zeitraum eine von der normalen nach vorne in Fahrrichtung gerichteten Fahrsitzhaltung eine seitlich oder rückwärtig ausgerichtete weitere Sitzarbeitshaltung ein, um beispielsweise seitlich hinten in der Fahrzeugkabine angeordnete Bedienelemente besser erreichen und bedienen zu können, oder auch nur um ein hinter dem landwirtschaftlichen Nutzfahrzeug angehängtes Arbeitsgerät für einen längeren Zeitraum besser beobachten zu können.

Derzeit können Fahrzeugführer den gesamten Fahrzeugsitz, also die im Wesentlichen gesamte starre Sitzkonstruktion mitsamt dem Sitzteil und dem Rückenlehnenteil, mit Hilfe eines Drehadapters um eine definierte Drehhochachse schwenken, um den rückwärtigen Raum innerhalb der Fahrzeugkabine besser erreichen bzw. außerhalb der Fahrzeugkabine besser beobachten zu können. Dabei bleibt das Sitzteil in Relation zum Rückenlehnenteil fest stehen. Dies führt zum einen dazu, dass der Fahrzeugführer sich aus einer komfortablen Sitzpolsterkontur des Fahrzeugsitzes herausdrehen muss, um insbesondere die Pedalerie des landwirtschaftlichen Nutzfahrzeugs weiter einigermaßen betriebssicher betätigen zu können. Dies kann zu Druckstellen und damit zu Diskomfort speziell im Gesäß- und Oberschenkelbereich des Fahrzeugführers führen.

Etwaige Anbauteile am Fahrzeugsitz, beispielsweise eine Multifunktionsarmlehne, drehen sich ebenso in Relation dazu mit. Bedienhebel, die weiter hinten seitlich in der Fahrzeugkabine angeordnet sind, können dadurch immer noch nicht komfortabel betätigt werden.

Die Rückenpolsterkontur ist aktuell derart ausgeformt, dass der Fahrzeugführer in der vorwärts gerichteten Fahrsitzhaltung maximal möglich gestützt wird, ohne ihm die notwendigen Freiheitsgrade zu nehmen, die er für seine Bewegungen im Fahrbetrieb benötigt. Um eine Bewegungsfreiheit im Schulter-Armbereich nicht zu behindern, darf das Rückenpolster des Rückenlehnenteils im oberen Bereich nicht zu sehr konturiert sein. Um jedoch eine gute Abstützung und damit eine ausreichend gute Entlastung des Fahrführers zu gewährleisten, sollte eine Abstützfläche in allen Fahrpositionen immer möglichst groß sein. Dies kann aus den vorher genannten Gründen, wie etwa die erforderlichen Freiheitsgrade für eine gute Bewegung, aktuell nur bedingt und daher unbefriedigend erzielt werden, da der Fahrer zwischen zwei extrem unterschiedlichen Fahrpositionen wechselt.

Ein weiterer großer Nachteil ist darin zu sehen, dass der mögliche Schwenkbereich des Drehadapters dadurch limitiert ist, dass das Nutzfahrzeug trotz der Beobachtung der hinteren Arbeitsgeräte weiter über die Pedalerie und das Lenkrad verkehrssicher gesteuert werden muss. Um diesen Ansprüchen gerecht zu werden, muss der Fahrzeugführer oftmals über einen längeren Zeitraum eine Zwangshaltung einnehmen, welche unweigerlich zu einer kritischen Torsion des gesamten Körpers führt. Wissenschaftliche Untersuchungen zeigen zudem, dass eine derartige Zwangshaltung insbesondere unter Schwingungsbelastung zur Schädigung der Körperstrukturen führen kann, speziell wenn der Körper nicht ausreichend gut unterstützt wird. Des Weiteren steht fest, dass die Belastung der Wirbelsäule durch eine gute Abstützung über das Rückenlehnenteil signifikant reduziert werden kann.

Es ist Aufgabe der Erfindung, einem Fahrzeugführer einen verbesserten Sitzkomfort speziell bei einer Einnahme einer Zwangshaltung zu bieten, um speziell ein landwirtschaftliches Nutzfahrzeug betriebssicherer und insbesondere verkehrssicherer führen zu können. Durch eine Entlastung der Körperstrukturen des Fahrzeugführers wird eine vorzeitige Ermüdung verhindert und damit die Arbeitseffizienz erhöht.

Die Aufgabe der Erfindung wird von einem Fahrzeugsitz nach Anspruch 1 gelöst.

Durch die an dem Seitenteil angeordnete zusätzliche Fahrzeugführerabstützeinrichtung kann konstruktiv außergewöhnlich einfach eine vorteilhafte zusätzliche Abstützanlagefläche für den Fahrzeugführer an dem Fahrzeugsitz in einem ansonsten fahrzeugsitzfreien Abstützbereich bereitgestellt werden, so dass der Fahrzeugführer bedarfsorientiert und temporär über eine Abstützmöglichkeit des Sitzteils bzw. eines Armlehnenteils hinaus zusätzlich gestützt werden kann. Und zwar in einem Bereich um den Fahrzeugsitz herum, welcher in einem Normalabstützbetriebszustand vorteilhafter Weise frei von Bauteilen bzw. Bauteilgruppen bleibt, um den Fahrbetrieb nicht nachteilig zu beeinträchtigen.

Die Begrifflichkeit "Normalabstützbetriebszustand" beschreibt im Sinne der Erfindung einen Betriebszustand am Fahrzeugsitz, in welchem die zusätzliche Fahrzeugführerabstützeinrichtung inaktiv ist und deshalb zur zusätzlichen Abstützung im ansonsten fahrzeugsitzfreien Abstützbereich nicht zur Verfügung steht.

Im Gegensatz hierzu ist vorliegend mit der Begrifflichkeit "Sonderabstützbetriebszustand" ein vom Normalabstützbetriebszustand abweichender weiterer Betriebszustand am Fahrzeugsitz beschrieben, in welchem die zusätzliche Fahrzeugführerabstützeinrichtung aktiv ist, dass heißt, in welchem sie in dem ansonsten fahrzeugsitzfreien Abstützbereich angeordnet ist und für eine zusätzliche Körperabstützung zur Verfügung steht.

Die Begrifflichkeit "Seitenteil" beschreibt hierbei eine dem Fahrzeugsitz funktional zugehörige Komponente, welche seitlich des Fahrzeugführers positionierbar ist. Das Seitenteil ist entweder ortsfest angeordnet oder kann idealerweise aus dem Seitenbereich heraus oder in den Seitenbereich hinein geschwenkt werden. Erfindungsgemäss ist das Seitenteil des Fahrzeugsitzes als Armlehnenteil ausgestaltet, auf welchem ein Fahrzeugführer einseitig oder beidseitig des Fahrzeugsitzes ablegen kann. Dementsprechend kann das vorliegende Seitenteil einseitig oder beidseitig am Fahrzeugsitz vorgesehen sein.

Die zusätzliche Fahrzeugführerabstützeinrichtung ist hierbei vorzugsweise derart gegenüber dem Fahrzeugsitz platziert, dass der Fahrzeugführer zumindest in Höhe seines Schulter- und/oder Brustkorbbereichs außermittig seitlich des Rückenlehnenteils abgestützt werden kann.

Vorteilhafter Weise kann durch die derart angeordnete zusätzliche Fahrzeugführerabstützeinrichtung der Fahrzeugführer während einer Zwangshaltungseinnahme, insbesondere der vorstehend beschrieben seitlich oder rückwärtig ausgerichteten Sitzarbeitsstellung, außerordentlich gut entlastet werden. Und vorzugsweise zwar nur dann, wenn es erforderlich ist, steht die zusätzliche Fahrzeugführerabstützeinrichtung zur Verfügung. Ansonsten, etwa in einer vorwärts ausgerichteten Fahrposition, stört die zusätzliche Fahrzeugführerabstützeinrichtung nicht, da sie in ihrer Ruhelage bzw. in ihrer angestammten Parkposition verbleibt.

Der Begriff "zusätzliche Fahrzeugführerabstützeinrichtung" beschreibt im Sinne der Erfindung eine Einrichtung zur zusätzlichen Abstützung des Fahrzeugführers während einer Zwangshaltung am Fahrzeugsitz. Insofern kann sie kumulativ insbesondere von dem Armlehnenteil ergänzt werden, an welcher sich der Fahrzeugführer während einer Zwangshaltung natürlich auch irgendwie abstützen könnte. Jedoch kann eine Abstützung an dem Armlehnenteil allein nur im Beckenbereich des Fahrzeugführers erfolgen. Dies ist jedoch für einen längeren Zeitraum nicht bequem und außerdem ergonomisch unzureichend. Um eine signifikante Entlastung der Körperstrukturen des Fahrzeugführers zu erzielen, muss eine für den Fahrzeugführer zur Verfügung stehende Abstützanlagefläche über diejenige eines aktuell vorhandenen Armlehnenteils hinausgehen.

Insofern ist es vorteilhaft, wenn die zusätzliche Fahrzeugführerabstützeinrichtung eine Abstützanlagefläche für einen Rücken- und/oder Schulterbereich eines Fahrzeugführers umfasst, wobei die Abstützanlagefläche vorteilhafter Weise ergonomisch geformt ist, um der menschlichen Körperanatomie besonders gut zu entsprechen. Dies fördert besonders die Akzeptanz beim Fahrzeugführer eine derartige zusätzliche Abstützung in Gestalt der vorliegenden zusätzlichen Fahrzeugführerabstützeinrichtung häufig zu gebrauchen. Zumal ist der Körper des Fahrzeugführers durch eine derartige Abstützanlagefläche vor Verletzungen gut geschützt, da es speziell im Einsatz mit landwirtschaftlichen Nutzfahrzeugen im Arbeitsbetrieb auf dem Acker oftmals sehr rau zugeht und der Fahrzeugführer hierbei für jede gezielte Abstützung dankbar ist.

Mit dem Begriff "fahrzeugsitzfreier Abstützbereich" ist im Sinne der Erfindung ein Bereich am Fahrzeugsitz bzw. um den Fahrzeugsitz herum beschrieben, in welchem permanente Abstützeinrichtungen des Fahrzeugsitzes nicht sinnvoll dauerhaft platziert sein können, da sie im normalen Fahrbetrieb zu sehr störend auf den Fahrzeugführer wirken würden.

Der vorliegende fahrzeugsitzfreie Abstützbereich liegt hierbei einerseits im Wesentlichen im oberen Drittel des Rückenlehnenteils, also erfindungsgemäss oberhalb der halben Höhe des Rückenlehnenteils und damit auch im unmittelbaren seitlichen bzw. rückwärtigen Sichtbereich des Fahrzeugführers. Er kann gegebenenfalls auch oberhalb dieses oberen Drittels liegen. Allein deshalb ist dieser fahrzeugsitzfreie Abstützbereich zumindest im normalen Vorwärtsfahrbetrieb unbedingt freizuhalten. Demnach ist er nicht mit einem herkömmlichen Abstützbereich zu verwechseln, in welchem beispielsweise eine Armlehneneinrichtung temporär hineingeschwenkt werden kann, auf welcher der Fahrzeugführer dann seinen Arm zur Entlastung ablegen kann.

Andererseits befindet sich der fahrzeugsitzfreie Abstützbereich im Sinne der Erfindung bezogen auf die normale Sitzrichtung außermittig des Rückenlehnenteils. Allein hierdurch ist er nicht mit einem herkömmlichen Abstützbereich zu verwechseln, in welchem eine etwa als Kopfstützeneinrichtung konzipierte Rückenteilverlängerungseinrichtung platziert ist. Dies gilt umso mehr, da der fahrzeugsitzfreie Abstützbereich zudem vor dem Rückenlehnenteil und seitlich hiervon angeordnet ist. Insofern ist der vorliegende fahrzeugsitzfreie Abstützbereich auch seitlich und oberhalb des Sitzteils des Fahrzeugsitzes vorgesehen.

Die Beschreibung "seitlich oder rückwärtig ausgerichteten Sitzarbeitshaltung" formuliert vorliegend eine Zwangshaltung des Fahrzeugführers im Wesentlichen bezüglich einer Oberkörperdrehung, um hierbei einen rückseitigen Arbeitsbereich insbesondere hinter dem landwirtschaftlichen Nutzfahrzeug besser beobachten zu können.

An dieser Stelle sei darauf hingewiesen, dass der vorliegende erfinderische Fahrzeugsitz nicht nur hinsichtlich eines Fahrzeugführers vorteilhaft eingesetzt werden kann. Vielmehr ist der erfindungsgemäße Fahrzeugsitz nahezu in jedem Anwendungsbereich einsetzbar, in welchem im Umfeld des Fahrzeugsitzes zumindest temporär eine zusätzliche Abstützeinrichtung bereitgestellt werden soll.

Es hat sich in der Praxis als vorteilhaft erwiesen, wenn die zusätzliche Fahrzeugführerabstützeinrichtung an dem Seitenteil , d.h. an dem Armlehnenteil aktivierbar angeordnet ist.

Hierdurch kann die zusätzliche Fahrzeugführerabstützeinrichtung überraschender Weise unglaublich schnell in den ansonsten fahrzeugsitzfreien Abstützbereich hinein bzw. aus diesem ebenso schnell wieder heraus bewegt werden.

Insofern sieht eine bevorzugte Ausführungsvariante vor, dass die zusätzliche Fahrzeugführerabstützeinrichtung an dem Seitenteil, d.h. an dem Armlehnenteil, mit einer Verlagerungseinrichtung befestigt ist, mittels welcher die zusätzliche Fahrzeugführerabstützeinrichtung von einer Parkposition an dem Seitenteil, insbesondere an dem Armlehnenteil, in eine zusätzliche Abstützlage in dem ansonsten fahrzeugsitzfreien Abstützbereich verlagerbar angeordnet ist.

In der Parkposition ist die zusätzliche Fahrzeugführerabstützeinrichtung idealerweise vollständig aus dem ansonsten fahrzeugsitzfreien Abstützbereich heraus verlagert angeordnet. Hierbei befindet sich der Fahrzeugsitz in einem Normalbetriebszustand, wie herkömmlich bekannt.

Im Gegensatz hierzu befindet sich die zusätzliche Fahrzeugführerabstützeinrichtung in einer Arbeitsposition, wenn sie im Sinne vorliegender Erfindung zum zusätzlichen Abstützen in dem ansonsten fahrzeugsitzfreien Abstützbereich platziert ist. Hierbei befindet sich der Fahrzeugsitz erfindungsgemäß in einem Sonderabstützbetriebszustand.

Somit kann die zusätzliche Fahrzeugführerabstützeinrichtung mittels der Verlagerungseinrichtung vorteilhafter Weise unabhängig von einer Bewegung des Seitenteils bzw. des Armlehnenteils verlagert werden.

Eine besonders bevorzugte Ausführungsvariante sieht vor, dass eine Parkposition der zusätzlichen Fahrzeugführerabstützeinrichtung zumindest teilweise innerhalb des Seitenteils, d.h., des Armlehnenteils, angeordnet ist. Hierdurch kann die zusätzliche Fahrzeugführerabstützeinrichtung zumindest teilweise innerhalb des Seitenteils angeordnet werden, wodurch sie extrem platzsparend und damit sehr gut integriert an dem vorliegenden Fahrzeugsitz untergebracht werden kann.

Eine in diesem Zusammenhang sehr einfache und damit vorteilhafte Realisierung kann dadurch erfolgen, wenn die zusätzliche Fahrzeugführerabstützeinrichtung vertikal verschieblich gegenüber dem Seitenteil, d.h. gegenüber dem Armlehnenteil, angeordnet ist.

Hierbei kann die zusätzliche Fahrzeugführerabstützeinrichtung sehr einfach in das vorhandene Seitenteil bzw. Armlehnenteil eingefahren und somit aus dem Bewegungsbereich des Fahrzeugführer wegverlagert werden und nur bei Bedarf wieder aus dem Seitenteil bzw. Armlehnenteil ausgefahren werden.

Darüber hinaus ist es vorteilhaft, wenn eine Parkposition der zusätzlichen Fahrzeugführerabstützeinrichtung seitlich des Seitenteils, d.h. seitlich des Armlehnenteils, an einer dem Sitzteil und/oder dem Rückenlehnenteil abgewandten Seite angeordnet ist. Hierbei kann die zusätzliche Fahrzeugführerabstützeinrichtung vorteilhafter Weise seitlich neben dem Seitenteil bzw. Armlehnenteil geparkt werden, wenn sie nicht gebraucht wird. Auch hierbei kann die zusätzliche Fahrzeugführerabstützeinrichtung schnell in den ansonsten fahrzeugsitzfreien Abstützbereich hinein oder umgekehrt bewegt werden.

Bei entsprechend ausgeformtem Seitenteil bzw. Armlehnenteil kann die zusätzliche Fahrzeugführerabstützeinrichtung innerhalb einer durch die Außenmaße des Seitenteils bzw. Armlehnenteils gebildeten Umhüllenden platziert werden. Insofern ist die zusätzliche Fahrzeugführerabstützeinrichtung dann ebenfalls zumindest teilweise quasi innerhalb des Seitenteils bzw. Armlehnenteils angeordnet.

Lassen es die Platzverhältnisse zu, kann eine Parkposition der zusätzlichen Fahrzeugführerabstützeinrichtung auch unterhalb des Seitenteils bzw. Armlehnenteils angeordnet sein, wodurch sich für die zusätzliche Fahrzeugführerabstützeinrichtung jedoch der Weg zwischen der Parkposition und der Arbeitsposition entsprechend vergrößert.

In diesem Zusammenhang kann insbesondere die vorliegende Verlagerungseinrichtung im Wesentlichen vertikal ausgerichtete Führungselemente umfassen, an welchen die zusätzliche Fahrzeugführerabstützeinrichtung, etwa mit geeigneten Schlittenelementen, hochwärts oder runterwärts geführt verlagert werden kann.

Alternativ oder kumulativ ist es vorteilhaft, wenn eine Parkposition der zusätzlichen Fahrzeugführerabstützeinrichtung sich zumindest bis teilweise hinter dem Rückenlehnenteil erstreckend angeordnet ist. Hierdurch ist die zusätzliche Fahrzeugführerabstützeinrichtung zumindest teilweise hinter dem Rückenlehnenteil anordenbar, obwohl sie an dem Armlehnenteil befestigt ist. Beispielsweise kann hierbei die zusätzliche Fahrzeugführerabstützeinrichtung in etwa horizontal aus dem ansonsten fahrzeugsitzfreien Abstützbereich heraus bewegt werden.

Es ist somit auch vorteilhaft, wenn die zusätzliche Fahrzeugführerabstützeinrichtung horizontal verschieblich gegenüber dem Seitenteil, d.h. gegenüber dem Armlehnenteil, angeordnet ist. Hierdurch kann die zusätzliche Fahrzeugführerabstützeinrichtung in die vorstehend beschriebene Parkposition bis hinter das Rückenlehnenteil verlagert werden. Beispielsweise kann insbesondere die vorliegende Verlagerungseinrichtung im Wesentlichen horizontal ausgerichtete Führungselemente umfassen, an welchen die zusätzliche Fahrzeugführerabstützeinrichtung, etwa mit geeigneten Schlittenelementen, vorwärts bzw. rückwärts geführt verlagert werden kann.

Es versteht sich, dass Verlagerungsbewegungen der zusätzlichen Fahrzeugführerabstützeinrichtung sich sowohl vertikal als auch horizontal überlagern können.

Insofern ist es vorteilhaft, wenn die zusätzliche Fahrzeugführerabstützeinrichtung vertikal und/oder horizontal verschieblich gegenüber dem Seitenteil, d.h. gegenüber dem Armlehnenteil, an dem Seitenteil bzw. an dem Armlehnenteil angeordnet ist.

Die zusätzliche Fahrzeugführerabstützeinrichtung kann darüber hinaus besonders vielfältig und auch sehr exakt bedarfsgerecht platziert werden, wenn die zusätzliche Fahrzeugführerabstützeinrichtung entlang einer Kurvenbahn verlagerbar an dem Seitenteils, d.h. an dem Armlehnenteil, angeordnet ist. Hierdurch kann eine besonders gute Abstützung des Fahrzeugführers gewährleistet werden.

Zum Formulieren einer derartigen vorteilhaften Kurvenbahn kann insbesondere die vorliegende Verlagerungseinrichtung entsprechende gebogene Traversenelemente umfassen, an welchen zugehörige Schlittenelemente geführt werden können.

Hinsichtlich einer anderen nicht weniger vorteilhaften Alternativen ist es auch vorteilhaft, wenn die zusätzliche Fahrzeugführerabstützeinrichtung rotatorisch um eine Schwenkachse an dem Seitenteil, d.h. an dem Armlehnenteil, klappbar angeordnet ist.

Vorteilhafter Weise kann das Seitenteil bzw. Armlehnenteil eine geeignete Einbuchtung aufweisen, in welche die zusätzliche Fahrzeugführerabstützeinrichtung hinein klappbar ist, wenn sie nicht gebraucht wird. Somit liegt die zusätzliche Fahrzeugführerabstützeinrichtung ebenfalls im Wesentlichen innerhalb des Seitenteils bzw. des Armlehnenteils, wenn sich der Fahrzeugsitz im Normalbetriebszustand im Sinne der Erfindung befindet.

Insofern ist es vorteilhaft, wenn die zusätzliche Fahrzeugführerabstützeinrichtung um wenigstens 180° um die Schwenkachse schwenkbar an dem Seitenteil bzw. Armlehnenteil angeordnet gelagert ist. Somit kann sie ausgehend von einer im Wesentlichen senkrechten Arbeitsposition in eine im Wesentlichen senkrechten Parkposition hinein oder umgekehrt geschwenkt werden, wodurch sie sowohl im Sonderabstützbetriebszustand als auch im Normalbetriebszustand sehr vorteilhaft positioniert werden kann.

Ist die zusätzliche Fahrzeugführerabstützeinrichtung lediglich um etwa 90° schwenkbar, kann sie beispielsweise in einer Parkposition horizontal ausgerichtet sein, um eine Armauflagefläche zu vergrößern oder bereitzustellen. Wird sie dann um 90° nach oben geschwenkt, kann mit ihr darüber hinaus vorteilhaft eine zusätzliche Abstützfläche im Sinne der vorliegenden Erfindung bereitgestellt werden.

Es versteht sich, dass je nachdem welche Platz- bzw. Bauraumverhältnisse an einer Fahrzeugkabine und/oder einem Fahrzeugsitz vorherrschen, auch andere Schwenkwinkel vorteilhaft vorgesehen werden können.

Zum Realisieren insbesondere eines derartigen Klappmechanismus kann insbesondere die vorliegenden Verlagerungseinrichtung entsprechende Scharnierelemente zum Führen der zusätzlichen Fahrzeugführerabstützeinrichtung, Bolzenelemente zum Führen und/oder zum Arretieren der zusätzlichen Fahrzeugführerabstützeinrichtung sowie Anschlagelemente zum Positionieren der zusätzlichen Fahrzeugführerabstützeinrichtung, Magnetelemente zum Haltern der zusätzlichen Fahrzeugführerabstützeinrichtung bzw. Feststellmittel unterschiedlichster Art zum Festlegen der zusätzlichen Fahrzeugführerabstützeinrichtung insbesondere in der Arbeitsposition umfassen.

Besonders stabil kann die zusätzliche Fahrzeugführerabstützeinrichtung von der Parkposition in die zusätzliche Abstützlage hinein verlagert werden, wenn die Verlagerungseinrichtung also Mittel zum rotatorischen und/oder translatorischen Verlagern der zusätzlichen Fahrzeugführerabstützeinrichtung aufweist.

Darüber hinaus ist es vorteilhaft, wenn die zusätzliche Fahrzeugführerabstützeinrichtung einen ortsfesten Teilabstützbereich umfasst, welcher durch einen beweglichen Teilabstützbereich flächig ergänzt ist. Beispielsweise nutzt die zusätzliche Fahrzeugführerabstützeinrichtung zumindest einen Teilbereich des vorhandenen Seitenteils bzw. Armlehnenteils und ergänzt diesen durch den beweglichen Teilabstützbereich. Hierdurch kann der Abstützkomfort noch weiter erhöht werden. Außerdem kann die zusätzliche Fahrzeugführerabstützeinrichtung hierdurch konstruktiv kompakter und auch einfacher bereitgestellt werden.

Darüber kann die zusätzliche Fahrzeugführerabstützeinrichtung konstruktiv weiter vereinfacht werden, wenn die zusätzliche Fahrzeugführerabstützeinrichtung vorteilhafter Weise ein gegenüber dem Sitzteil, dem Rückenlehnenteil und dem Seitenteil, d.h. dem Armlehnenteil, verlagerbares Plattenelement mit einer zusätzlichen Abstützfläche umfasst.

Die zusätzliche Fahrzeugführerabstützeinrichtung bzw. insbesondere das verlagerbare Plattenelement können einteilig, aber auch mehrteilig ausgestaltet sein, wobei einzelne Segmente klappbar untereinander verbunden sind.

Beispielsweise sind die zusätzliche Fahrzeugführerabstützeinrichtung bzw. das verlagerbare Plattenelement zwei- oder dreifach faltbar ausgestaltet.

Hierbei können einzelne Segmente der zusätzlichen Fahrzeugführerabstützeinrichtung bzw. des verlagerbaren Plattenelements auch aufgerollt werden, um in einer Parkposition gut verstaut werden zu können.

Auch ist es möglich, dass die zusätzliche Fahrzeugführerabstützeinrichtung bzw. insbesondere das verlagerbare Plattenelement zuerst im Wesentlichen translatorisch aus einer Parkposition heraus bewegt werden, beispielsweise hochwärts, um anschließend entlang einer Kreisbogenbahn in Gänze oder segmentweise in eine Arbeitsposition hinein geschwenkt oder gekippt zu werden.

Vorzugsweise verschwindet diese zusätzliche Abstützfläche in oder unter dem Seitenteil bzw. Armlehnenteil, wenn die zusätzliche Fahrzeugführerabstützeinrichtung außer Funktion ist. Oder die zusätzliche Abstützfläche verschwindet hinter dem Rückenlehnenteil des Fahrzeugsitzes. Es versteht sich, dass hierbei die zusätzliche Fahrzeugführerabstützeinrichtung an dem Seitenteil bzw. Armlehnenteil entsprechend verlagert und geparkt wird.

Es ist des Weiteren vorteilhaft, wenn die zusätzliche Fahrzeugführerabstützeinrichtung unmittelbar oberhalb einer im Wesentlichen horizontal ausgerichteten Armauflagefläche des Fahrzeugsitzes anordenbar ist. Hierdurch kann das Armlehnenteil die zusätzliche Fahrzeugführerabstützeinrichtung unterseitig vorteilhaft verlängern.

Darüber hinaus kann die zusätzliche Fahrzeugführerabstützeinrichtung im Sonderabstützbetriebszustand des vorliegenden Fahrzeugsitzes ausgehend von dem Seitenteil bzw. dem Armlehnenteil konstruktiv äußerst einfach innerhalb des ansonsten fahrzeugsitzfreien Abstützbereichs angeordnet werden.

Um die zusätzliche Fahrzeugführerabstützeinrichtung vorteilhaft einsetzen zu können, ist es vorteilhaft, wenn der Fahrzeugsitz eine Betätigungseinrichtung zum Betätigen der zusätzlichen Fahrzeugführerabstützeinrichtung aufweist, wobei die Betätigungseinrichtung an dem Seitenteil, d.h. an dem Armlehnenteil, und/oder an dem Rückenlehnenteil angeordnet ist.

Ist die Betätigungseinrichtung bzw. sind Betätigungselemente, wie etwa Druckknöpfe oder dergleichen, hiervon an dem Seitenteil bzw. an dem Armlehnenteil platziert, kann die Funktion der zusätzlichen Fahrzeugführerabstützeinrichtung intuitiv einfach durch eine Abstützbewegung des Unterarms auf das Seitenteil bzw. das Armlehnenteil oder eine händische Druckbetätigung der Betätigungselemente gesteuert werden.

Ist die Betätigungseinrichtung bzw. sind Betätigungselemente, wie etwa Druckknöpfe oder dergleichen, hiervon alternativ oder kumulativ an dem Rückenlehnenteil und/oder an dem Sitzteil vorgesehen, kann die Funktionalität bezüglich einer Bedienung der zusätzlichen Fahrzeugführerabstützeinrichtung anders bzw. differenzierter gestaltet werden.

Die zusätzliche Fahrzeugführerabstützeinrichtung kann besonders leicht verwendet werden, wenn sie mittels einer Druckbetätigungseinrichtung an einem Polsterteil des Rückenlehnenteils betätigbar an dem Rückenlehenteil angeordnet ist. Beispielsweise ist die Druckbetätigungseinrichtung in einem oberen rechten Randbereich des Rückenlehnenteils angeordnet. Hierdurch kann die zusätzliche Fahrzeugführerabstützeinrichtung automatisch der Bewegung des Fahrzeugführers folgen, wodurch der Fahrzeugführer in seiner Aufgabenvielfalt besonders gut entlastet werden kann, da er kein zusätzliches Bedienelement betätigen muss.

Ist die zusätzliche Fahrzeugführerabstützeinrichtung somit körperhaltungsabhängig interaktiv betätigbar angeordnet, kann sie außerordentlich einfach aktiviert werden, ohne dass der Fahrzeugführer händisch Bedienelemente zum Aktivieren der zusätzlichen Fahrzeugführerabstützeinrichtung betätigen muss.

Vorliegend beschreibt der Begriff "körperhaltungsabhängig" die vorteilhafte Aktivierung bzw. Betätigung der zusätzlichen Fahrzeugführerabstützeinrichtung durch einfache Verlagerung des Körpers im Fahrzeugsitz bzw. in den dessen Polsterteilen.

Beispielsweise zum Auslösen von Drucksensoren, welche etwa innerhalb des Rückenlehnenteils eine Druckbelastung bzw. eine Druckbelastungsveränderung auf den Fahrzeugsitz durch den Fahrzeugführer detektieren. Bei einem bestimmten Druckmuster kann dann die zusätzliche Fahrzeugführerabstützeinrichtung aktiviert und von der Parkposition in den ansonsten fahrzeugsitzfreien Abstützbereich hinein verlagert werden.

Insofern sieht eine weitere vorteilhafte Ausführungsvariante vor, dass der Fahrzeugsitz an dem Rückenlehnenteil eine fahrzeugführerhaltungsabhängige interaktive Betätigungseinrichtung aufweist, wobei die zusätzliche Fahrzeugführerabstützeinrichtung mittels einer Druckbetätigungseinrichtung an einem Polsterteil des Rückenlehnenteils betätigbar an dem Rückenlehnenteil angeordnet ist.

Vorteilhafter Weise kann eine Körperhaltung oder eine Körperhaltungsveränderung kumulativ oder alternativ auch mit einer Fahrzeugsitzumfelderkennung überwacht werden, um dann bei einem bestimmten Verhaltensmuster eine bevorstehende Körperhaltungsveränderung zu antizipieren und eine Aktivierung der zusätzlichen Fahrzeugführerabstützeinrichtung frühzeitig einzuleiten.

Es versteht sich, dass für eine derartige interaktive Betätigung noch viele weitere technische Umsetzungsmöglichkeiten heran gezogen werden können.

Beispielsweise kann eine Erfassung der Körperposition auch anhand eines vorzugsweise Kraftsensors oder eines kapazitativen Sensors oder anders arbeitender Sensoren erfolgen, die eine Haltungsänderung des Fahrzeugführers gut detektieren können. Sobald das System die Haltungsänderung erkennt, verändert der Fahrzeugsitz im Sinne der Erfindung seine Unterstützungsflächen zum Abstützen des Fahrzeugführers.

Eine vorteilhafte Weiterbildung der vorliegenden Erfindung kann erzielt werden, wenn das Sitzteil, das Rückenlehnenteil und das Seitenteil bzw. das Armlehnenteil eine Hauptaußenkontur des Fahrzeugsitzes ausgestalten, und die zusätzliche Fahrzeugführerabstützeinrichtung temporär außerhalb der Hauptaußenkontur anordenbar an dem Seitenteil bzw. Armlehnenteil gehaltert ist.

Vorteilhafter Weise kann die zusätzliche Fahrzeugführerabstützeinrichtung bei einem Nichtgebrauch hinter dieser Hauptaußenkontur zurückliegen oder diese mit begrenzen und ausgestalten, so dass sie speziell im normalen Vorwärtsfahrbetrieb, in welchem der Fahrzeugführer eine vorwärts ausgerichtete Fahrposition einnimmt, im Umfeld des Sitzbereiches bzw. des Fahrzeugsitzes nicht stört. Insofern wird auch eine Rundumsicht am landwirtschaftlichen Nutzfahrzeug nicht negativ beeinträchtig, was hinsichtlich der Verkehrssicherheit, aber auch der Arbeitssicherheit von erheblicher Bedeutung ist, da hierdurch Unfälle mit sich im Arbeitsradius des landwirtschaftlichen Nutzfahrzeugs aufhaltenden Personen verhindert werden können.

Darüber hinaus sieht eine besonders vorteilhafte Ausführungsvariante vor, dass der Fahrzeugsitz neben dem Normalabstützbetriebszustand mindestens einen Sonderabstützbetriebszustand aufweist, in welchem die zusätzliche Fahrzeugführerabstützeinrichtung vor dem Rückenlehnenteil und einen oberhalb und/oder seitlich des Sitzteils liegenden Fahrzeugführerbewegungsfreiraum temporär begrenzend anordenbar ist.

Durch den begrenzten Fahrzeugführerbewegungsfreiraum kann im Sinne der Erfindung temporär eine vorteilhafte zusätzliche Fahrzeugführerabstützung bereitgestellt werden, um den Fahrzeugführer hinsichtlich einer eingenommenen Zwangshaltung vorteilhaft zu entlasten.

Darüber hinaus sei der Vollständigkeit halber an dieser Stelle noch erwähnt, dass alternativ eine Aktivierung der zusätzlichen Fahrzeugführerabstützeinrichtung auch manuell eingeleitet werden kann, indem in der Tat hierfür eine Bedieneinrichtung ausnahmslos oder alternativ händisch betätigt werden kann, wie vorstehend bereits erwähnt.

Die Erfindung zeichnet sich des Weiteren auch dadurch aus, dass sie zum einen den Nachteil des bisher verwendeten Drehadapters insbesondere hinsichtlich des ansonsten verdrehten Sitzpolsterteils verhindert. Das Sitzpolsterteil verbleibt vorzugsweise in seiner ursprünglich angestammten Position, dreht also nicht um eine Hochachse, und es kann somit das Gesäß bzw. den Unterkörper des Fahrzeugführers weiterhin optimal stützen. Gegebenenfalls kann eine geringe Schwenkbewegung des Fahrzeugsitzes bzw. des Sitzpolsterteils zugelassen werden, wenn dies erwünscht ist, um einen Verdrehungsgrad bzw. eine Torsion des Oberkörpers des Fahrzeugführers reduzieren zu können. Hierdurch kann die vorliegende Erfindung nochmals gut weiterentwickelt werden. Die Position des Fahrers zur Pedalerie und zum Lenkrad verändert sich vorteilhafter Weise aber auch hierbei kaum bzw. nur in einem vernachlässigbaren Maße. Insofern kann das landwirtschaftliche Nutzfahrzeug weiterhin sinnvoll und besonders verkehrssicher bedient und gelenkt werden. Es kommt, wie eingangs schon erwähnt, zu keinen Druckstellen oder nennenswerten Diskomfortempfindungen beim Fahrzeugführer aufgrund einer ungünstigen Verdrehung des Sitzpolsterteils unter dem Gesäß, wie es bisher oftmals der Fall ist. Da der Kontakt der Beine bzw. der Füße zur Pedalerie nahezu unverändert bestehen bleiben kann, kommt es zudem zu keiner kritischen Beeinträchtigung der Fahrzeugbedienung. Das Rückenlehnenteil, eine Rückenverlängerungseinrichtung oder weitere Zusatzelemente hiervon, welche eine funktionale Rückenunterstützung erfüllen, passen sich vorteilhafter Weise sowohl an die Anthropometrie als auch an die jeweilige Arbeitsaufgabe des Fahrerzeugführers bestens an.

Durch die im Sinne der Erfindung vorgeschlagene zusätzliche Fahrzeugführerabstützeinrichtung können alle Fahrerpositionen optimal gestützt werden. Vor allem hinsichtlich der rückwärtig ausgerichteten Sitzarbeitshaltung kann eine nahezu optimale Abstützung des Oberkörpers des Fahrzeugführers insbesondere aufgrund einer beispielsweise seitlich einschwenkbaren Rückenverlängerungseinrichtung erzielt werden.

Eine alternative Abstützung kann idealerweise mit einem komfortoptimierten insbesondere linken Armlehnenteil erfolgen, die auf ihrer Innenseite, also eine dem Fahrzeugführer zugewandten Seite, eine zusätzliche Kontur bzw. Anlagefläche aufweist, die an die Anthropometrie des Fahrerzeugführers angepasst ist. Dadurch kann in allen wesentlichen Fahrpositionen eine nahezu maximale Unterstützungsfläche zum zusätzlichen Abstützen des Fahrzeugführers erreicht werden. Hierdurch verringert sich die Belastung des Fahrzeugführers signifikant. Da der Körper selbst in Zwangspositionen wesentlich besser gestützt werden kann, erhält der Fahrzeugführer seine Leistungsfähigkeit über einen nicht unerheblich längeren Zeitraum aufrecht. Zudem weiß man, dass eine maximale Abstützung des Körpers über das Rückenpolster die Belastung auf die Wirbelsäule vorteilhaft reduziert. Weiterhin verhindert eine gute Abstützung einen Kontrollverlust des Fahrzeugs aufgrund fehlender Unterstützungsflächen für einen Fahrzeugführer. Dem Fahrzeugführer wird darüber hinaus vorteilhafter Weise die Möglichkeit gegeben, unterschiedliche und sinnvoll unterstützte Körperhaltungen besonders leicht und bequem einzunehmen, was eine wesentliche Voraussetzung für ein langes Fahren ohne übermäßigen Abfall der Leistungsfähigkeit ist und überdies eine Gesundheitsgefährdung bei langandauernden Arbeiten unter einer Zwangshaltung reduziert.

Ein weiterer besonders wichtiger Vorteil der Erfindung liegt in einem außergewöhnlich nutzerfreundlichen Bedienkomfort. Eine automatische Anpassung des Fahrzeugsitzes an unterschiedliche Körperhaltungen ist außerordentlich wichtig, um den Fahrzeugführer insbesondere von ablenkenden Verstellaktionen hinsichtlich einer zuvorkommenden und bequemeren Fahrzeugsitzeinstellung während eines Fahrbetriebs zu entlasten. Denn gesunderhaltende Funktionen sollten möglichst automatisch erfolgen, da der Fahrzeugführer mit dem Erfüllen der einzelnen Fahraufgaben sowieso schon einer sehr hohen Bedienbelastung unterliegt. Verstellaktionen, welche nicht unmittelbar zur Fahraufgabe gehören bzw. unbedingt erforderlich sind, werden oft vernachlässigt und nicht oder zu spät vorgenommen.

An dieser Stelle sei explizit darauf hingewiesen, dass nahezu alle vorstehend erläuterten Verlagerungsvarianten der zusätzlichen Fahrzeugführerabstützeinrichtung, speziell auch in Bezug auf die diesbezügliche Verlagerungseinrichtung, elektrisch, pneumatisch, hydraulisch und/oder mechanisch umgesetzt werden können, auch je nachdem welche Möglichkeiten ein Fahrzeug bietet, an welchem der vorliegende Fahrzeugsitz eingesetzt wird.

Eine translatorische oder rotatorische Verlagerung der zusätzlichen Fahrzeugführerabstützeinrichtung kann beispielsweise auch durch eine unmittelbare Druckausübung an einem bestimmten Bereich und/oder in einer bestimmten Druckrichtung auf die zusätzliche Fahrzeugführerabstützeinrichtung initiiert werden, etwa nach dem Kugelschreiberprinzip. Hierbei ist die zusätzliche Fahrzeugführerabstützeinrichtung etwa vorgespannt an dem Armlehnenteil gelagert, und durch Betätigen einer Mechanik wird die zusätzliche Fahrzeugführerabstützeinrichtung frei gegeben und kann von einer Parkposition in eine Arbeitsposition verlagert werden.

Im Allgemeinen ist sowohl eine stufige Verlagerung als auch eine stufenlose Verlagerung der zusätzlichen Fahrzeugführerabstützeinrichtung möglich.

Es versteht sich des Weiteren, dass eine Verlagerung der zusätzlichen Fahrzeugführerabstützeinrichtung mechanisch, hydraulisch, pneumatisch oder auch mittels Elektromotoren erfolgen kann, je nachdem welche technischen Voraussetzungen an dem jeweiligen Nutzfahrzeug zur Verfügung stehen.

Die Aufgabe der Erfindung wird auch von einem Nutzfahrzeug, insbesondere von einem landwirtschaftlichen Nutzfahrzeug, gelöst, welches sich durch einen Fahrzeugsitz für einen Fahrzeugführer nach einem der vorliegend beschriebenen Merkmale auszeichnet.

Durch ein mit dem erfindungsgemäßen Fahrzeugsitz ausgerüstetes insbesondere landwirtschaftliches Nutzfahrzeug wird ein Fahrzeugführer hinsichtlich seiner Gesundheit wesentlich besser unterstützt bzw. geschützt als es bisher möglich ist.

Weitere Vorteile, Ziele und Eigenschaften vorliegender Erfindung werden anhand anliegender Zeichnung und nachfolgender Beschreibung erläutert, in welchen beispielhaft einige Fahrzeugsitze mit ersten möglichen Ausgestaltungsvarianten bezüglich einer zusätzlichen Fahrzeugführerabstützeinrichtung dargestellt und beschrieben ist. In der Zeichnung zeigen:
- Figur 1A: schematisch eine Vorderansicht eines Fahrzeugsitzes mit einer in einem Armlehnenteil im Wesentlichen horizontal versenkbaren zusätzlichen Fahrzeugführerabstützeinrichtung in einem Sonderabstützbetriebszustand mit ausgefahrener zusätzlicher Fahrzeugführerabstützeinrichtung;
- Figur 1B: schematisch eine Seitenansicht des Fahrzeugsitzes aus der Figur 1 A in dem Sonderabstützbetriebszustand mit ausgefahrener zusätzlicher Fahrzeugführerabstützeinrichtung;
- Figur 1C: schematisch eine perspektivische Ansicht des Fahrzeugsitzes aus den Figuren1A und 1 B in einem Normalbetriebszustand mit eingefahrener zusätzlicher Fahrzeugführerabstützeinrichtung ;
- Figur 2A: schematisch eine Vorderansicht eines weiteren Fahrzeugsitzes mit einer an einem Armlehnenteil im Wesentlich horizontal verschieblich gelagerten zusätzlichen Fahrzeugführerabstützeinrichtung in einem Sonderabstützbetriebszustand mit ausgefahrener zusätzlicher Fahrzeugführerabstützeinrichtung;
- Figur 2B: schematisch eine Seitenansicht des weiteren Fahrzeugsitzes aus der Figur 2A in dem Sonderbetriebszustand mit ausgefahrener zusätzlicher Fahrzeugführerabstützeinrichtung;
- Figur 2C: schematisch eine erste perspektivische Ansicht des weiteren Fahrzeugsitzes aus den Figuren 2A und 2B in dem Sonderbetriebszustand mit ausgefahrener zusätzlicher Fahrzeugführerabstützeinrichtung;
- Figur 2D: schematisch eine perspektivische Ansicht des weiteren Fahrzeugsitzes aus den Figuren 2A bis 2C in einem Normalbetriebszustand mit eingefahrener zusätzlicher Fahrzeugführerabstützeinrichtung;
- Figur 3A: schematisch eine Aufsicht eines alternativen Fahrzeugsitzes mit einer an einem Armlehnenteil im Wesentlich vertikal verschieblich gelagerten zusätzlichen Fahrzeugführerabstützeinrichtung in einem Sonderabstützbetriebszustand mit ausgefahrener zusätzlicher Fahrzeugführerabstützeinrichtung;
- Figur 3B: schematisch eine Seitenansicht des alternativen Fahrzeugsitzes aus der Figur 3A in dem Sonderbetriebszustand mit ausgefahrener zusätzlicher Fahrzeugführerabstützeinrichtung;
- Figur 3C: schematisch eine erste perspektivische Ansicht des alternativen Fahrzeugsitzes aus den Figuren 3A und 3B in dem Sonderbetriebszustand mit ausgefahrener zusätzlicher Fahrzeugführerabstützeinrichtung;
- Figur 3D: schematisch eine weitere perspektivische Ansicht des alternativen Fahrzeugsitzes aus den Figuren 3A bis 3C in einem Normalbetriebszustand mit eingefahrener zusätzlicher Fahrzeugführerabstützeinrichtung;
- Figur 4A: schematisch eine Aufsicht eines anderen Fahrzeugsitzes mit einer an einem Armlehnenteil im Wesentlich um eine Horizontalklappachse klappbar gelagerten zusätzlichen Fahrzeugführerabstützeinrichtung in einem Sonderabstützbetriebszustand mit ausgeklappter zusätzlicher Fahrzeugführerabstützeinrichtung;
- Figur 4B: schematisch eine Seitenansicht des anderen Fahrzeugsitzes aus der Figur 4A in dem Sonderbetriebszustand mit ausgeklappter zusätzlicher Fahrzeugführerabstützeinrichtung;
- Figur 4C: schematisch eine erste perspektivische Ansicht des anderen Fahrzeugsitzes aus den Figuren 4A und 4B in dem Sonderbetriebszustand mit ausgeklappter zusätzlicher Fahrzeugführerabstützeinrichtung;
- Figur 4D: schematisch eine zusätzliche perspektivische Ansicht des anderen Fahrzeugsitzes aus den Figuren 4A bis 4C in einem Normalbetriebszustand mit eingeklappter zusätzlicher Fahrzeugführerabstützeinrichtung;
- Figur 5A: schematisch eine perspektivische Ansicht eines sich in einem Normalabstützbetriebszustand befindlichen Fahrzeugsitzes mit einem eine zusätzlichen Fahrzeugführerabstützeinrichtung umfassenden Armlehnenteil; und
- Figur 5B: schematisch eine weitere perspektivische Ansicht des Fahrzeugsitzes aus der Figur 5A in einem Sonderabstützbetriebszustand mit hochverlagerter zusätzlicher Fahrzeugführerabstützeinrichtung.

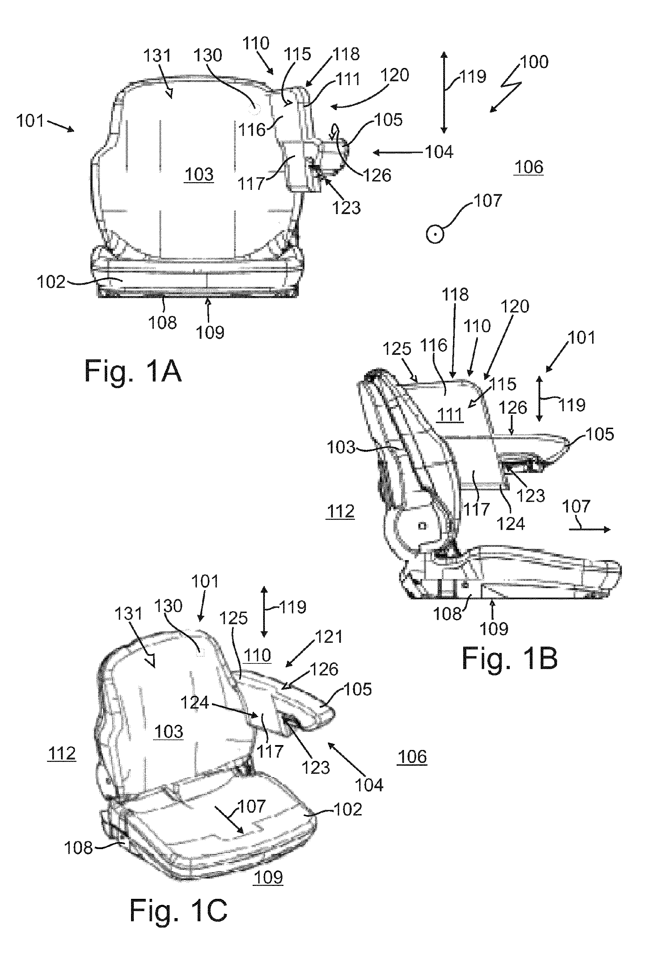

Das in den Figuren 1 A bis 1 C gezeigte erste Ausführungsbeispiel 100 zeigt beispielhaft einen ersten Fahrzeugsitz 101, der in einer Fahrzeugkabine (hier nicht gezeigt) eines hier nicht gezeigten landwirtschaftlichen Nutzfahrzeugs eingebaut ist.

Der Fahrzeugsitz 101 weist im Wesentlichen ein Sitzteil 102, ein Rückenlehnenteil 103 und ein Seitenteil 104 in Gestalt eines Armlehnenteils 105 auf, welches, in Vorwärtsfahrtrichtung 107 des landwirtschaftlichen Nutzfahrzeugs gesehen, an der linken Seite 106 des Fahrzeugsitzes 101 befestigt ist.

Der Fahrzeugsitz 101 ist über ein Fahrzeugsitzgestell 108 unterseitig 109 über eine hier ebenfalls nicht dargestellten Konsole an einem Kabinenboden (hier nicht gezeigt) des landwirtschaftlichen Nutzfahrzeugs befestigt. Gegebenenfalls kann die Konsole eine Federungs- und/oder Dämpfungseinrichtung zum Federn des Fahrzeugsitzes 101 umfassen.

Der Fahrzeugsitz 101 umfasst des Weiteren erfindungsgemäß eine in einem ansonsten fahrzeugsitzfreien Abstützbereich 110 temporär anordenbare zusätzliche Fahrzeugführerabstützeinrichtung 111, mittels welcher ein auf dem Sitzteil 102 sitzender Passagier (nicht dargestellt) zusätzlich abgestützt werden kann, wenn dieser eine Zwangshaltung eingenommen hat, beispielsweise um im rückwärtigen Bereich 112 des Fahrzeugsitzes 101 angeordnete Bedienelemente (nicht gezeigt) des landwirtschaftlichen Nutzfahrzeugs zu bedienen oder um ein Arbeitsgerät hinter dem landwirtschaftlichen Nutzfahrzeug zu beobachten.

Die zusätzliche Fahrzeugführerabstützeinrichtung 111 zeichnet sich durch eine zusätzliche Abstützfläche 115 aus, welche in diesem ersten Ausführungsbeispiel 100 im Wesentlichen durch einen beweglichen Teilabstützbereich 116 der zusätzlichen Fahrzeugführerabstützeinrichtung 111 ausgestaltet ist.

Vorteilhaft vergrößert wird die zusätzliche Abstützfläche 115 durch einen ortsfesten Teilabstützbereich 117, welcher die zusätzliche Abstützfläche 115 entsprechend unterhalb des beweglichen Teilabstützbereichs 116 angeordnet ist.

Die zusätzliche Abstützfläche 115 wird insbesondere mittels eines verlagerbaren Plattenelements 118 der zusätzlichen Fahrzeugführerabstützeinrichtung 111 bereitgestellt, welches gemäß der Vertikalrichtungen 119 hochwärts und runterwärts an und gegenüber dem Armlehnenteil 105 gelagert ist.

Die zusätzliche Abstützfläche 115 ist hierbei im Wesentlichen senkrecht verlaufend angeordnet und sowohl dem Sitzteil 102 als auch dem Rückenlehnenteil 103, und somit auch dem Passagier, zugewandt angeordnet.

Gemäß der Figuren 1 A und 1 B hat die zusätzliche Fahrzeugführerabstützeinrichtung 111 eine Arbeitsposition 120 außerhalb und oberhalb des Armlehnenteils 105 eingenommen. Dementsprechend befindet sich der Fahrzeugsitz 101 in einem Sonderabstützbetriebszustand.

In dem Sonderabstützbetriebszustand kann sich der auf dem Fahrzeugsitz 1 sitzende Passagier während einer seitlich oder rückwärtig ausgerichteten Sitzarbeitshaltung zumindest in Höhe seines Schulter- und Brustkorbbereichs außermittig seitlich des Rückenlehnenteils 103 zusätzlich zielgerichtet abzustützen, wodurch er speziell in dieser Zwangshaltung besonders vorteilhaft von der zusätzlichen Fahrzeugführerabstützeinrichtung 111 gestützt wird. Dies ist bisher nicht möglich.

Gemäß der Figur 1C hat die zusätzliche Fahrzeugführerabstützeinrichtung 111 eine Parkposition 121 innerhalb des Armlehnenteils 105 eingenommen, so dass sich der Fahrzeugsitz 101 entsprechend in einem Normalabstützbetriebszustand befindet.

Im Normalabstützbetriebszustand, in welchem der Passagier in einer Vorwärtsfahrposition nach vorne blickend auf dem Fahrzeugsitz 101 Platz genommen hat, formulieren das Sitzteil 102, das Rücklehnenteil 103 und das Armlehnenteil 105 eine Hauptaußenkontur des Fahrzeugsitzes 101, an welcher der Passagier sich abstützen kann.

Die zusätzliche Fahrzeugführerabstützeinrichtung 111 wird hierbei zwischen der Parkposition 121 und der Arbeitsposition 120 oder umgekehrt mittels einer hier nicht näher gezeigten Verlagerungseinrichtung 123 verlagert, wobei die Verlagerungseinrichtung 123 hierzu vertikal ausgerichtete Traversenelemente und hieran verschieblich gelagerte Schlittenelemente (beide nicht gezeigt, da innerhalb des Armlehnenteils 105 angeordnet) umfasst.

In der Parkposition 121 ist die zusätzliche Fahrzeugführerabstützeinrichtung 111 vollständig innerhalb eines taschenartigen Gehäuses 124 des Armlehnenteils 105 angeordnet, so dass sie außerhalb nicht störend angeordnet ist.

In der Parkposition 121 bildet das obere Ende 125 der zusätzlichen Fahrzeugführerabstützeinrichtung 111 zumindest einen Teilbereich einer Armlehnenauflagefläche 126 des Armlehnenteils 105.

Eine Bedienung bzw. Aktivierung der zusätzlichen Fahrzeugführerabstützeinrichtung 111 erfolgt hierbei automatisch interaktiv mittels einer auf das Rückenlehnenteil 103 ausgeübte Körperkraft und damit vorteilhafter Weise ohne eine zusätzliche händisch initiierte Bedienelementeauslösung. Hierzu ist eine entsprechende Betätigungseinrichtung 130 unterhalb einer Polsteroberfläche 131 oben am Rückenlehnenteil 103 vorgesehen.

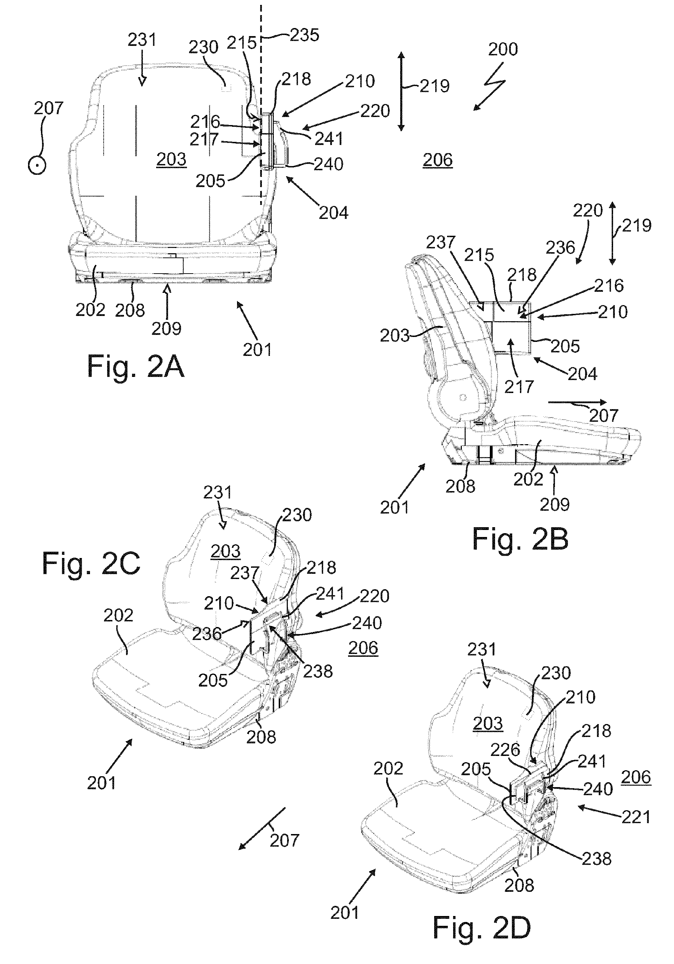

Bei einem in den Figuren 2A bis 2D gezeigten nächsten Ausführungsbeispiel 200 besteht ein weiterer Fahrzeugsitz 201 ebenfalls im Wesentlichen aus einem Sitzteil 202, einem Rückenlehnenteil 203 und einem Seitenteil 204, welches wieder in Gestalt eines Armlehnenteils 205 ausgeführt ist. Das Armlehnenteil 205 ist, in Vorwärtsfahrtrichtung 207 eines landwirtschaftlichen Nutzfahrzeugs gesehen, an der linken Seite 206 des Fahrzeugsitzes 201 befestigt.

Der Fahrzeugsitz 201 ist über ein Fahrzeugsitzgestell 208 unterseitig 209 über eine hier ebenfalls nicht dargestellten Konsole an einem Kabinenboden (hier nicht gezeigt) des landwirtschaftlichen Nutzfahrzeugs befestigt, wobei die Konsole eine Federungs- und/oder Dämpfungseinrichtung zum Federn des Fahrzeugsitzes 201 umfassen kann.

An dem Armlehnenteil 205 ist eine zusätzliche Fahrzeugführerabstützeinrichtung 211 mittels einer Verlagerungseinrichtung 223 derart befestigt, dass die zusätzliche Fahrzeugführerabstützeinrichtung 211 gemäß der Vertikalrichtungen 219 zwischen einer Arbeitsposition 220 (siehe Figuren 2A bis 2C) und einer Parkposition 221 (siehe Figur 2D) runterwärts und hochwärts oder entsprechend umgekehrt verlagert werden kann, je nachdem, ob der Fahrzeugsitz 201 in einem Sonderabstützbetriebszustand (siehe Figuren 2A bis 2C) oder in einem Normalabstützbetriebszustand (siehe Figur 2D) verwendet wird.

Die eigentliche zusätzliche Fahrzeugführerabstützeinrichtung 211 weist ein verlagerbares Plattenelement 218 auf, welches in diesem nächsten Ausführungsbeispiel 200 immer hochkant ausgerichtet angeordnet ist, unabhängig davon, ob es sich in der Parkposition 221 oder in der Arbeitsposition 220 befindet.

Die eigentliche zusätzliche Fahrzeugführerabstützeinrichtung 211 ist in der Arbeitsposition 220 in einem ansonsten fahrzeugsitzfreien Abstützbereich 210 angeordnet. Insofern stellt das verlagerbare Plattenelement 218 speziell in der Arbeitsposition 220 eine zusätzliche Abstützfläche 215 zur Verfügung, welche - genau wie im ersten Ausführungsbeispiel - im Wesentlichen in einer Vertikalebene 235 oder parallel oder windschief dazu ausgerichtet ist.

Die zusätzliche Abstützfläche 215 ist konturiert und in einem vorderen Bereich 236 in etwa konkav ausgeformt, wobei der vordere Bereich 236 in einen in etwa planen, hinteren Bereich 237 der zusätzlichen Abstützfläche 215 übergeht.

Ähnlich bzw. idealerweise identisch ist das Armlehnenteil 205 ausgeformt, welches unterhalb der zusätzlichen Fahrzeugführerabstützeinrichtung 211 angeordnet ist, wenn sich die zusätzliche Fahrzeugführerabstützeinrichtung 211 in der Arbeitsposition 220 befindet.

Somit kann ein Passagier insgesamt besonders gut im Sinne der vorliegenden Erfindung an der zusätzlichen Fahrzeugführerabstützeinrichtung 211 zusätzlich abgestützt werden, wenn er die vorstehend beschriebene Zwangshaltung einnehmen muss.

Vorteilhaft wird die zusätzliche Abstützfläche 215 auch hier durch einen ortsfesten Teilabstützbereich 217 vergrößert, welcher die zusätzliche Abstützfläche 215 entsprechend unterhalb eines beweglichen Teilabstützbereichs 216 der zusätzlichen Fahrzeugführerabstützeinrichtung 211 angeordnet ist.

In der Parkposition 221 ist die zusätzliche Fahrzeugführerabstützeinrichtung 211 seitlich neben dem Armlehnenteil 205 an einer insbesondere dem Sitzteil 202 abgewandten Seite 238 derart platziert, dass die zusätzliche Fahrzeugführerabstützeinrichtung 211 vorteilhafter Weise nicht weiter in dem ansonsten fahrzeugsitzfreien Abstützbereich 210 angeordnet ist.

Die zusätzliche Fahrzeugführerabstützeinrichtung 211 bildet in der Parkposition 221 gemeinsam mit dem Armlehnenteil 205 zudem vorteilhafter Weise eine extra breite Armlehnenauflagefläche 226.

Die Verlagerungseinrichtung 223 weist ein gebogenes Führungselementepaar 240, an welchem ein Halteelemente 241 der zusätzlichen Fahrzeugführerabstützeinrichtung 211 in den Vertikalrichtungen 219 entlang einer Kurvenbahn (hier nicht explizit beziffert) verschoben werden kann.

Eine Bedienung bzw. Aktivierung der zusätzlichen Fahrzeugführerabstützeinrichtung 211 erfolgt auch hierbei wieder automatisch interaktiv mittels einer auf das Rückenlehnenteil 203 ausgeübte Körperkraft und damit vorteilhafter Weise ohne eine zusätzliche händisch initiierte Bedienelementeauslösung. Hierzu ist eine entsprechende Betätigungseinrichtung 230 unterhalb einer Polsteroberfläche 231 oben am Rückenlehnenteil 203 vorgesehen.

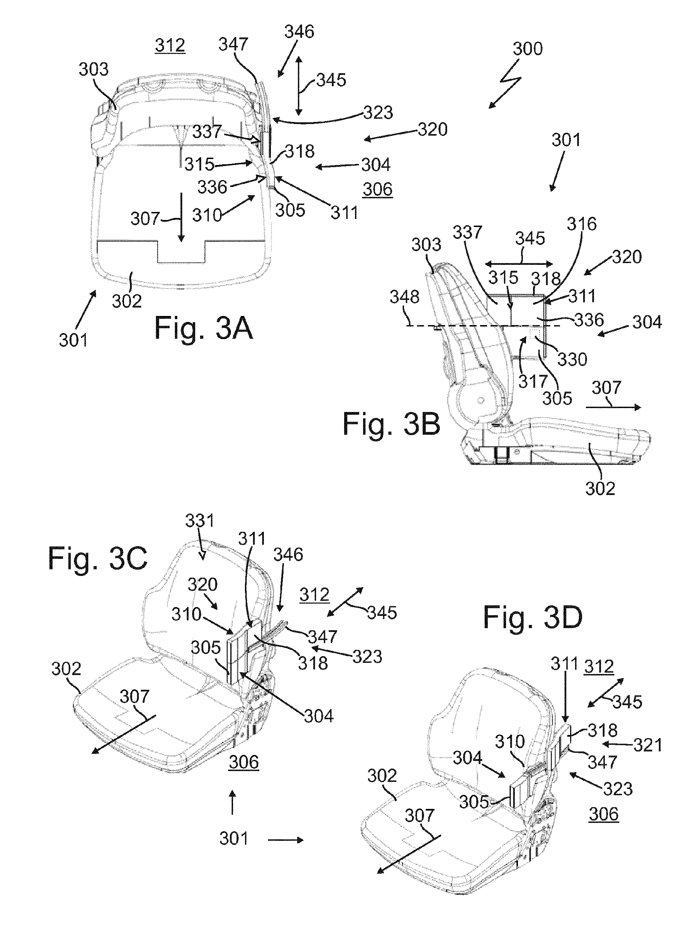

Der hinsichtlich des in den Figuren 3A bis 3D gezeigten dritten Ausführungsbeispiels 300 dargestellte alternative Fahrzeugsitz 301 zeichnet sich durch einen im Wesentlichen gleichen Aufbau auf, wie er bereits hinsichtlich der beiden Ausführungsbeispiele 100 und 200 beschrieben ist.

So umfasst er ein Sitzteil 302, ein Rückenlehnenteil 303, ein als Armlehnenteil 305 ausgestalteten Seitenteil 304 und eine in einem ansonsten fahrzeugsitzfreien Abstützbereich 310 temporär anordenbare zusätzliche Fahrzeugführerabstützeinrichtung 311, mittels welcher ein auf dem Fahrzeugsitz 302 in Vorwärtsfahrtrichtung 307 sitzender Passagier während einer seitlich oder rückwärtig ausgerichteten Sitzarbeitshaltung zusätzlich abgestützt werden kann. Das Armlehnenteil 305 ist auch hier an der linken Seite 306 des Fahrzeugsitzes 301 befestigt.

Im Unterschied zu den Fahrzeugsitzen 101 und 201 wird die zusätzliche Fahrzeugführerabstützeinrichtung 311 zwischen einer Arbeitsposition 320 (siehe Figuren 3A bis 3C) und einer Parkposition 321 (siehe Figur 3D) jedoch nicht vertikal verlagert, sondern gemäß Horizontalrichtungen 345 horizontal entlang einer sich horizontal erstreckenden Kurvenbahn 346.

Hierzu weist der Fahrzeugsitz 301 eine Verlagerungseinrichtung 323 mit einem gebogenen Schienenelement 347 auf, welches in einer Horizontalebene 348 (siehe Figur 3B) liegt und mit seiner Längserstreckung im Wesentlichen in Vorwärtsfahrtrichtung 307 ausgerichtet an dem Armlehnenteil 305 befestigt ist. Das gebogene Schienenelement 347 könnte auch parallel oder windschief zu dieser Horizontalebene 348 angeordnet sein.

Jedenfalls kann die zusätzliche Fahrzeugführerabstützeinrichtung 311 mittels der Verlagerungseinrichtung 323 zumindest teilweise bis in einen rückwärtigen Bereich 312 hinter dem Rückenlehnenteil 303 verlagert und dort in der Parkposition 321 zwischengeparkt werden.

Die zusätzliche Fahrzeugführerabstützeinrichtung 311 ist immer, also sowohl in der Parkposition 321 als auch in der Arbeitsposition 320, oberhalb des Armlehnenteils 305 angeordnet.

Insofern wird außen neben dem Armlehnenteil 305 für die Parkposition 321 kein zusätzlicher Bauraum benötigt. Auch kann das Armlehnenteil 305 sehr schmal gebaut werden, da es die zusätzliche Fahrzeugführerabstützeinrichtung 311 im Inneren nicht aufnehmen muss.

Die eigentliche zusätzliche Fahrzeugführerabstützeinrichtung 311 weist wieder ein verlagerbares Plattenelement 318 auf, welches immer hochkant ausgerichtet angeordnet ist, unabhängig davon, ob es sich in der Parkposition 321 oder in der Arbeitsposition 320 befindet.

Die eigentliche zusätzliche Fahrzeugführerabstützeinrichtung 311 ist in der Arbeitsposition 320 in einem ansonsten fahrzeugsitzfreien Abstützbereich 310 angeordnet. Insofern stellt das verlagerbare Plattenelement 318 speziell in der Arbeitsposition 320 eine zusätzliche Abstützfläche 315 zur Verfügung, welche im Wesentlichen vertikal bzw. senkrecht zur Horizontalebene 348 ausgerichtet ist.

Die zusätzliche Abstützfläche 315 ist konturiert und in einem vorderen Bereich 336 in etwa konkav ausgeformt, wobei der vordere Bereich 336 in einen in etwa planen, hinteren Bereich 337 der zusätzlichen Abstützfläche 315 übergeht. Ähnlich bzw. idealerweise identisch ist das Armlehnenteil 305 ausgeformt.

Somit kann ein Passagier an der zusätzlichen Fahrzeugführerabstützeinrichtung 311 insgesamt außergewöhnlich gut im Sinne der vorliegenden Erfindung zusätzlich abgestützt werden.

Vorteilhaft ist die zusätzliche Abstützfläche 315 auch hier durch einen ortsfesten Teilabstützbereich 317 (siehe nur Figur 3B) vergrößert, welcher die zusätzliche Abstützfläche 315 entsprechend unterhalb eines beweglichen Teilabstützbereichs 316 (siehe nur Figur 3B) der zusätzlichen Fahrzeugführerabstützeinrichtung 311 angeordnet ist.

Die zusätzliche Fahrzeugführerabstützeinrichtung 311 wird mittels einer Betätigungseinrichtung 330 bedient, welche an einer Innenseite des Armlehnenteils 305 angeordnet ist.

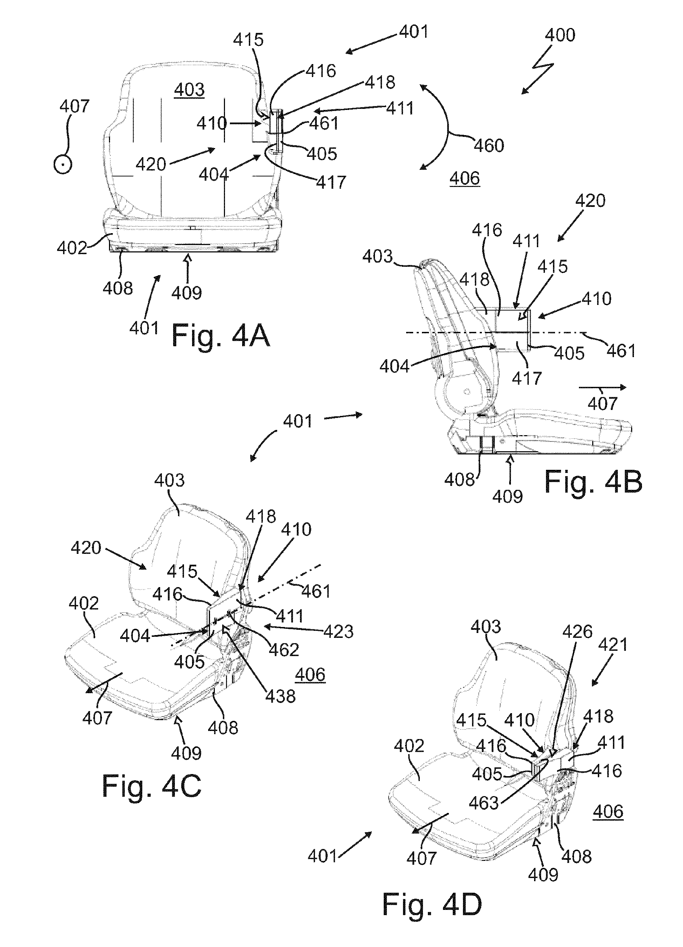

Bei dem in den Figuren 4A bis 4D gezeigten vierten Ausführungsbeispiel 400 besteht ein anderer Fahrzeugsitz 401 wieder im Wesentlichen aus einem Sitzteil 402, einem Rückenlehnenteil 403 und einem Seitenteil 404 in Gestalt eines Armlehnenteils 405. Letzteres ist an der linken Seite 406 des Fahrzeugsitzes 401 befestigt. Der Fahrzeugsitz 401 ist in einer Fahrzeugkabine (hier nicht gezeigt) eines hier nicht gezeigten landwirtschaftlichen Nutzfahrzeugs eingebaut und über ein Fahrzeugsitzgestell 408 unterseitig 409 über eine hier ebenfalls nicht dargestellten Konsole an einem Kabinenboden (hier nicht gezeigt) des landwirtschaftlichen Nutzfahrzeugs befestigt. Gegebenenfalls kann die Konsole eine Federungs- und/oder Dämpfungseinrichtung zum Federn des Fahrzeugsitzes 401 umfassen.

Der Fahrzeugsitz 401 weist eine in einem ansonsten fahrzeugsitzfreien Abstützbereich 410 temporär anordenbare zusätzliche Fahrzeugführerabstützeinrichtung 411. Die zusätzliche Fahrzeugführerabstützeinrichtung 411 zeichnet sich durch eine zusätzliche Abstützfläche 415 aus, welche durch einen beweglichen Teilabstützbereich 416 der zusätzlichen Fahrzeugführerabstützeinrichtung 411 ausgestaltet ist. Die zusätzliche Abstützfläche 415 ist vorteilhaft noch durch einen ortsfesten Teilabstützbereich 417 erweitert, welcher die zusätzliche Abstützfläche 415 entsprechend unterhalb des beweglichen Teilabstützbereichs 416 angeordnet ist.

Die zusätzliche Fahrzeugführerabstützeinrichtung 411 und die zusätzliche Abstützfläche 415 werden insbesondere mittels eines verlagerbaren Plattenelements 418 bereitgestellt, welches gemäß Schwenkrichtungen 460 (siehe Figur 1 A) um eine Schwenkachse 461 hochwärts und runterwärts gegenüber dem Armlehnenteil 405 schwenkbar ist. Hierzu ist das verlagerbare Plattenelement 418 sogleich an dem Armlehnenteil 405 mittels einer Verlagerungseinrichtung 423 gelagert ist.

Die Verlagerungseinrichtung 423 umfasst selbstrastende Scharnierelemente 462 (hier nur exemplarisch beziffert), mittels welchen die zusätzliche Fahrzeugführerabstützeinrichtung 411 zwischen einer Arbeitsposition 420 (Figuren 4a bis 4C) und einer Parkposition 421 (Figur 4D) hin und her geschwenkt werden kann.

Die zusätzliche Abstützfläche 415 ist in der Arbeitsposition 420 im Wesentlichen senkrecht verlaufend angeordnet und sowohl dem Sitzteil 402 als auch dem Rückenlehnenteil 403, und somit auch dem Passagier, zugewandt angeordnet.

In der Arbeitsposition 420 ist die zusätzliche Fahrzeugführerabstützeinrichtung 411 oberhalb des Armlehnenteils 105 platziert. Dementsprechend befindet sich der Fahrzeugsitz 401 in einem Sonderabstützbetriebszustand.

In der Parkposition 421 ist die zusätzliche Fahrzeugführerabstützeinrichtung 411 seitlich neben dem Armlehnenteil 405 an einer insbesondere dem Sitzteil 402 abgewandten Seite 438 derart heran geschwenkt, dass die zusätzliche Fahrzeugführerabstützeinrichtung 411 vorteilhafter Weise nicht in dem ansonsten fahrzeugsitzfreien Abstützbereich 410 angeordnet ist.

Die zusätzliche Fahrzeugführerabstützeinrichtung 411 bildet in ihrer Parkposition 421 mit ihrer Scharnierseite 463 und gemeinsam mit dem Armlehnenteil 405 eine extrem breite Armlehnenauflagefläche 426 (siehe Figur 4D).

Die zusätzliche Fahrzeugführerabstützeinrichtung 411 kann in diesem Ausführungsbeispiel 400 einfach händisch hochwärts in die Arbeitsposition 420 hinein geklappt werden.

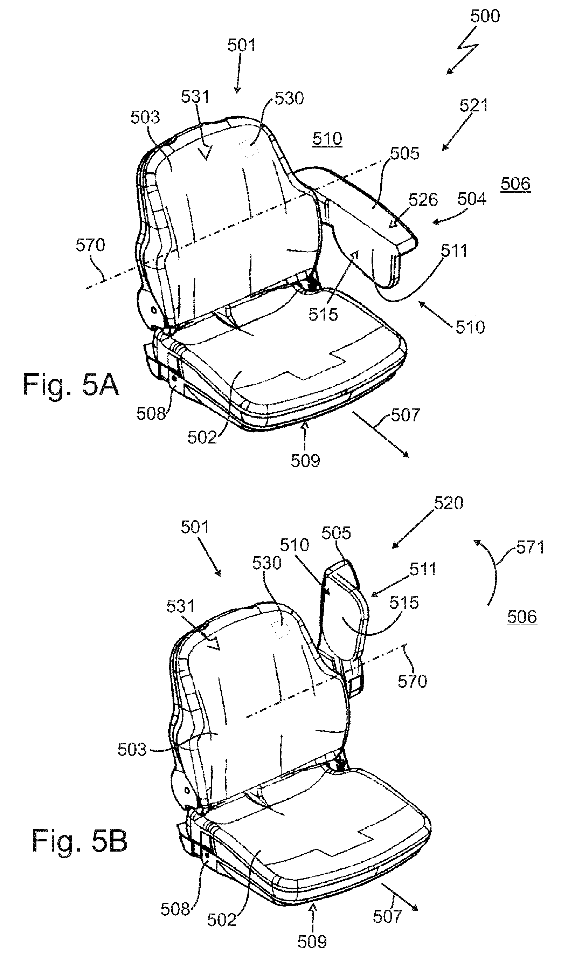

Das in den Figuren 5A und 5B fünfte Ausführungsbeispiel 500 zeigt einen an einem landwirtschaftlichen Nutzfahrzeug eingesetzten anderen Fahrzeugsitz 501, welcher im Wesentlichen auch aus einem Sitzteil 502, aus einem Rückenlehnenteil 503 und aus einem Seitenteil 504 als um eine Querachse 570 schwenkbares Armlehnenteil 505 besteht. Das Armlehnenteil 505 ist - in Vorwärtsfahrtrichtung 507 des landwirtschaftlichen Nutzfahrzeugs gesehen - an der linken Seite 506 des Fahrzeugsitzes 501 befestigt ist. Der Fahrzeugsitz 501 ist über ein Fahrzeugsitzgestell 508 unterseitig 509 über eine hier ebenfalls nicht dargestellten Konsole an einem Kabinenboden (hier nicht gezeigt) des landwirtschaftlichen Nutzfahrzeugs befestigt. Gegebenenfalls kann die Konsole eine Federungs- und/oder Dämpfungseinrichtung umfassen.

Das Armlehnenteil 505 weist unterhalb einer Armlehnenauflagefläche 526 eine zusätzliche Fahrzeugführerabstützeinrichtung 511 auf, welche eine zusätzliche Abstützfläche 515 formuliert, die wiederum in einem ansonsten fahrzeugsitzfreien Bereich 510 hinein verlagert werden kann, wenn das Armlehnenteil 505 um die Querachse geschwenkt und die zusätzliche Fahrzeugführerabstützeinrichtung 511 hierbei mit einer Kreisbogenbewegung 571 hochwärts verlagert wird. Die zusätzliche Fahrzeugführerabstützeinrichtung 511 ist in diesem fünften Ausführungsbeispiel 500 ortsfest immer unten an dem Armlehnenteil 505 angeordnet.

Nach der Darstellung gemäß der Figur 5A befindet sich die zusätzliche Fahrzeugführerabstützeinrichtung 511 in einer Parkposition 521 und das Armlehnenteil 505 kann als Armauflage verwendet werden. Insofern befindet sich der Fahrzeugsitz 501 in einem Normalabstützbetriebszustand (nicht explizit beziffert).

Nach der weiteren Darstellung gemäß der Figur 5B befindet sich die zusätzliche Fahrzeugführerabstützeinrichtung 511 in einer Arbeitsposition 520, in welcher das Armlehnenteil 505 nicht als Armauflage verwendet werden kann. Insofern befindet sich der Fahrzeugsitz 501 hierbei in einem Sonderabstützbetriebszustand (nicht explizit beziffert).

An der so am Fahrzeugsitz 501 platzierten zusätzliche Fahrzeugführerabstützeinrichtung 511 kann sich ein Passagier sehr gut dauerhaft abstützen, wenn er sich in einer vorstehend schon vielfach beschrieben Zwangshaltung befindet.

Eine Bedienung bzw. Aktivierung der zusätzlichen Fahrzeugführerabstützeinrichtung 511 erfolgt hierbei automatisch interaktiv mittels einer auf das Rückenlehnenteil 503 ausgeübte Körperkraft und damit vorteilhafter Weise ohne eine zusätzliche händisch initiierte Bedienelementeauslösung. Hierzu ist eine entsprechende Betätigungseinrichtung 530 unterhalb einer Polsteroberfläche 531 oben am Rückenlehnenteil 503 vorgesehen.

Es versteht sich, dass es sich bei den vorstehend erläuterten Ausführungsbeispielen lediglich um erste Ausgestaltungen von erfindungsgemäßen Fahrzeugsitzen handelt. Insofern beschränkt sich die Ausgestaltung der Erfindung nicht auf diese Ausführungsbeispiele.

### Bezugszeichenliste

- 100: erstes Ausführungsbeispiel
- 101: Fahrzeugsitz
- 102: Sitzteil
- 103: Rückenlehnenteil
- 104: Seitenteil
- 105: Armlehnenteil
- 106: linke Seite
- 107: Vorwärtsfahrtrichtung
- 108: Fahrzeugsitzgestell
- 109: unterseitig
- 110: ansonsten fahrzeugsitzfreier Abstützbereich
- 111: zusätzliche Fahrzeugführerabstützeinrichtung
- 112: rückwärtiger Bereich
- 115: zusätzliche Abstützfläche
- 116: beweglicher Teilabstützbereich
- 117: ortsfester Teilabstützbereich
- 118: Plattenelement
- 119: Vertikalrichtungen
- 120: Arbeitsposition
- 121: Parkposition
- 123: Verlagerungseinrichtung
- 124: Gehäuse
- 125: oberes Ende
- 126: Armlehnenauflagefläche
- 130: Betätigungseinrichtung
- 131: Polsteroberfläche
- 200: zweites Ausführungsbeispiel
- 201: Fahrzeugsitz
- 202: Sitzteil
- 203: Rückenlehnenteil
- 204: Seitenteil
- 205: Armlehnenteil
- 206: linke Seite
- 207: Vorwärtsfahrtrichtung
- 208: Fahrzeugsitzgestell
- 209: unterseitig
- 210: ansonsten fahrzeugsitzfreier Abstützbereich
- 211: zusätzliche Fahrzeugführerabstützeinrichtung
- 215: zusätzliche Abstützfläche
- 216: beweglicher Teilabstützbereich
- 217: ortsfester Teilabstützbereich
- 218: Plattenelement
- 219: Vertikalrichtungen
- 220: Arbeitsposition
- 221: Parkposition
- 223: Verlagerungseinrichtung
- 226: Armlehnenauflagefläche
- 230: Betätigungseinrichtung
- 231: Polsteroberfläche
- 235: Vertikalebene
- 236: vorderer Bereich
- 237: hinterer Bereich
- 238: abgewandte Seite
- 240: gebogenes Führungselementepaar
- 241: Halteelemente

- 300: drittes Ausführungsbeispiel
- 301: Fahrzeugsitz
- 302: Sitzteil
- 303: Rückenlehnenteil
- 304: Seitenteil
- 305: Armlehnenteil
- 306: linke Seite
- 307: Vorwärtsfahrtrichtung
- 310: ansonsten fahrzeugsitzfreier Abstützbereich
- 311: zusätzliche Fahrzeugführerabstützeinrichtung
- 315: zusätzliche Abstützfläche
- 316: beweglicher Teilabstützbereich
- 317: ortsfester Teilabstützbereich
- 318: Plattenelement
- 320: Arbeitsposition
- 321: Parkposition
- 323: Verlagerungseinrichtung
- 330: Betätigungseinrichtung
- 336: vorderer Bereich
- 337: hinterer Bereich
- 345: Horizontalrichtungen
- 346: horizontal erstreckende Kurvenbahn
- 347: gebogenes Schienenelement
- 348: Horizontalebene
- 400: viertes Ausführungsbeispiel
- 401: Fahrzeugsitz
- 402: Sitzteil
- 403: Rückenlehnenteil
- 404: Seitenteil
- 405: Armlehnenteil
- 406: linke Seite
- 407: Vorwärtsfahrtrichtung
- 408: Fahrzeugsitzgestell
- 409: unterseitig
- 410: ansonsten fahrzeugsitzfreier Abstützbereich
- 411: zusätzliche Fahrzeugführerabstützeinrichtung
- 415: zusätzliche Abstützfläche
- 416: beweglicher Teilabstützbereich
- 417: ortsfester Teilabstützbereich
- 418: Plattenelement
- 420: Arbeitsposition
- 421: Parkposition
- 423: Verlagerungseinrichtung
- 426: Armlehnenauflagefläche
- 438: abgewandte Seite
- 460: Schwenkrichtungen
- 461: Schwenkachse
- 462: Scharnierelemente
- 463: Scharnierseite

- 500: fünftes Ausführungsbeispiel
- 501: Fahrzeugsitz
- 502: Sitzteil
- 503: Rückenlehnenteil
- 504: Seitenteil
- 505: Armlehnenteil
- 506: linke Seite
- 507: Vorwärtsfahrtrichtung
- 508: Fahrzeugsitzgestell
- 509: unterseitig
- 510: ansonsten fahrzeugsitzfreier Abstützbereich
- 511: zusätzliche Fahrzeugführerabstützeinrichtung
- 515: zusätzliche Abstützfläche
- 520: Arbeitsposition
- 521: Parkposition
- 526: Armlehnenauflagefläche
- 530: Betätigungseinrichtung
- 531: Polsteroberfläche
- 570: Querachse
- 571: Kreisbogenbewegung

## Patentansprüche

1. Fahrzeugsitz (101; 201; 301; 401; 501) mit einem Sitzteil (102; 202; 302; 402; 502), mit einem Rückenlehnenteil (103; 203; 303; 403; 503) und mit einem Seitenteil (104; 204; 304; 404; 504), welches als Armlehnenteil (105; 205; 305; 405; 505) ausgestaltet ist, zum gemeinsamen Stützen eines Fahrzeugführers in seiner Sitzposition auf dem Fahrzeugsitz (101; 201; 301; 401; 501),
**gekennzeichnet durch**
eine an dem Seitenteil (104; 204; 304; 404; 504) des Fahrzeugsitzes (101; 201; 301; 401; 501) angeordnete, in einem ansonsten fahrzeugsitzfreien Abstützbereich (110; 210; 310; 410; 510) temporär anordenbare zusätzliche Fahrzeugführerabstützeinrichtung (111; 211; 311; 411; 511), mittels welcher ein auf dem Fahrzeugsitz (101; 201; 301; 401; 501) sitzender Fahrzeugführer während einer seitlich oder rückwärtig ausgerichteten Sitzarbeitshaltung zusätzlich abstützbar ist, wobei sich der fahrzeugsitzfreie Abstützbereich (110; 210; 310; 410; 510) bezogen auf die normale Sitzrichtung außermittig des Rückenlehnenteils (103; 203; 303; 403; 503) befindet und zudem seitlich des Rückenlehnenteils (103; 203; 303; 403; 503) und vor dem Rückenlehnenteil (103; 203; 303; 403; 503) und oberhalb der halben Höhe des Rückenlehnenteils (103; 203; 303; 403; 503) angeordnet ist, und wobei die zusätzliche, sich in Fahrzeugsitzlängsrichtung erstreckende Fahrzeugführerabstützeinrichtung (111; 211; 311; 411; 511) eine hierbei im Wesentlichen senkrecht verlaufend angeordnete Abstützanlagefläche (115; 215; 315; 415; 515) für einen Rücken- und/oder Schulterbereich eines Fahrzeugführers umfasst.

2. Fahrzeugsitz (101; 201; 301; 401) nach Anspruch 1,
**dadurch gekennzeichnet, dass**
die zusätzliche Fahrzeugführerabstützeinrichtung (111; 211; 311; 411) an dem Seitenteil (104; 204; 304; 404) mit einer Verlagerungseinrichtung (123; 223; 323; 423) befestigt ist, mittels welcher die zusätzliche Fahrzeugführerabstützeinrichtung (111; 211; 311; 411) von einer Parkposition (121; 221; 321; 421) an dem Seitenteil (104; 204; 304; 404) in eine zusätzliche Abstützlage in dem ansonsten fahrzeugsitzfreien Abstützbereich (110; 210; 310; 410) verlagerbar angeordnet ist.

3. Fahrzeugsitz (101) nach Anspruch 1 oder 2,
**dadurch gekennzeichnet, dass**
eine Parkposition (121) der zusätzlichen Fahrzeugführerabstützeinrichtung (111) zumindest teilweise innerhalb des Seitenteils (104) angeordnet ist.

4. Fahrzeugsitz (201; 401) nach einem der Ansprüche 1 bis 3,
**dadurch gekennzeichnet, dass**
eine Parkposition (221; 421) der zusätzlichen Fahrzeugführerabstützeinrichtung seitlich des Seitenteils (204; 404) an einer dem Sitzteil (202; 402) und/oder dem Rückenlehnenteil (203; 403) abgewandten Seite (238; 438) angeordnet ist.

5. Fahrzeugsitz (301) nach einem der Ansprüche 1 bis 4,
**dadurch gekennzeichnet, dass**
eine Parkposition (321) der zusätzlichen Fahrzeugführerabstützeinrichtung (311) sich zumindest bis teilweise hinter dem Rückenlehnenteil (303) erstreckend angeordnet ist.

6. Fahrzeugsitz (101; 201; 301; 401) nach einem der Ansprüche 1 bis 5,
**dadurch gekennzeichnet, dass**
die zusätzliche Fahrzeugführerabstützeinrichtung (111; 211; 311; 411) vertikal (119; 219) und/oder horizontal (345) verschieblich gegenüber dem Seitenteil (104; 204; 304; 404) angeordnet ist.

7. Fahrzeugsitz (201; 301) nach einem der Ansprüche 1 bis 6,
**dadurch gekennzeichnet, dass**
die zusätzliche Fahrzeugführerabstützeinrichtung (211; 311) entlang einer Kurvenbahn (346) verlagerbar an dem Seitenteil (204; 304) angeordnet ist.

8. Fahrzeugsitz (401) nach einem der Ansprüche 1 bis 5,
**dadurch gekennzeichnet, dass**
die zusätzliche Fahrzeugführerabstützeinrichtung (411) rotatorisch um eine Schwenkachse (461) an dem Seitenteil (404) klappbar angeordnet ist.

9. Fahrzeugsitz (101; 201; 301; 401) nach einem der Ansprüche 1 bis 8,
**dadurch gekennzeichnet, dass**
die zusätzliche Fahrzeugführerabstützeinrichtung (111; 211; 311; 411) einen beweglichen Teilabstützbereich (116; 216, 316; 416) umfasst, welcher durch einen ortsfesten Teilabstützbereich (117; 217; 317; 417) flächig ergänzt ist.

10. Fahrzeugsitz (101; 201; 301; 401) nach einem der Ansprüche 1 bis 9,
**dadurch gekennzeichnet, dass**
die zusätzliche Fahrzeugführerabstützeinrichtung (111; 211; 311; 411) ein gegenüber dem Sitzteil (102; 202; 302; 402), dem Rückenlehnenteil (103; 203; 303; 403) und dem Seitenteil (104; 204; 304; 404) verlagerbares Plattenelement (118; 218; 318; 418) mit einer zusätzlichen Abstützfläche (115; 215; 315; 415) umfasst.

11. Fahrzeugsitz (101; 201; 301; 401) nach einem der Ansprüche 1 bis 10,
**dadurch gekennzeichnet, dass**
die zusätzliche Fahrzeugführerabstützeinrichtung (111; 211; 311; 411) unmittelbar oberhalb einer im Wesentlichen horizontal ausgerichteten Armauflagefläche (126; 226; 426) des Fahrzeugsitzes (101; 201; 301; 401) anordenbar ist.

12. Fahrzeugsitz (101; 201; 301; 501) nach einem der Ansprüche 1 bis 11,
**dadurch gekennzeichnet, dass**
der Fahrzeugsitz (101; 201; 301; 501) eine Betätigungseinrichtung (130; 230; 330; 530) zum Betätigen der zusätzlichen Fahrzeugführerabstützeinrichtung (111; 211; 311; 511) aufweist, wobei die Betätigungseinrichtung (130; 230; 330; 530) an dem Seitenteil (304) und/oder an dem Rückenlehnenteil (103; 203; 503) angeordnet ist.

13. Nutzfahrzeug, insbesondere landwirtschaftliches Nutzfahrzeug, mit einem Fahrzeugsitz (101; 201; 301; 401; 501) für einen Fahrzeugführer,
**gekennzeichnet durch**
einen Fahrzeugsitz (101; 201; 301; 401; 501) nach einem der vorhergehenden Ansprüche.

## Claims

1. Vehicle seat (101; 201; 301; 401; 501) with a seat part (102; 202; 302; 402; 502) with a backrest part (103; 203; 303; 403; 503) and with a side part (104; 204; 304; 404; 504), which is designed as an armrest part (105; 205; 305; 405; 505), in order to collectively support a vehicle driver in his/her seated position on the vehicle seat (101; 201; 301; 401; 501),
**characterised by**
an additional vehicle driver support device (111; 211; 311; 411; 511) which is arranged on the side part (104; 204; 304; 404; 504) of the vehicle seat (101; 201; 301; 401; 501) and can be temporarily arranged in a support region (110; 210; 310; 410; 510) which is otherwise free of the vehicle seat, by means of which vehicle driver support device a vehicle driver sitting on the vehicle seat (101; 201; 301; 401; 501) can be additionally supported in the case of a laterally or rearwardly oriented seated working posture, the support region (110; 210; 310; 410; 510) which is free of the vehicle seat being located eccentrically with respect to the backrest part (103; 203; 303; 403; 503) based on the normal seat direction and additionally being arranged at the side of the backrest part (103; 203; 303; 403; 503) and in front of the backrest part (103; 203; 303; 403; 503) and above half the height of the backrest part (103; 203; 303; 403; 503), and the additional vehicle driver support device (111; 211; 311; 411; 511), which extends in the longitudinal direction of the vehicle seat, comprising a support contact surface (115; 215; 315; 415; 515), which is arranged here so as to extend substantially vertically and is intended for a back and/or shoulder region of a vehicle driver.

2. Vehicle seat (101; 201; 301; 401) according to claim 1, **characterised in that** the additional vehicle driver support device (111; 211; 311; 411) is attached to the side part (104; 204; 304; 404) by a displacement device (123; 223; 323; 423), by means of which the additional vehicle driver support device (111; 211; 311; 411) is arranged so as to be movable from a stowed position (121; 221; 321; 421) on the side part (104; 204; 304; 404) into an additional support position in the support region (110; 210; 310; 410) which is otherwise free of the vehicle seat.

3. Vehicle seat (101) according to either claim 1 or claim 2, **characterised in that** a stowed position (121) of the additional vehicle driver support device (111) is arranged at least in part inside the side part (104).

4. Vehicle seat (201; 401) according to any of claims 1 to 3, **characterised in that** a stowed position (221; 421) of the additional vehicle driver support device is arranged at the side of the side part (204; 404) on a face (238; 438) which faces away from the seat part (202; 402) and/or from the backrest part (203; 403).

5. Vehicle seat (301) according to any of claims 1 to 4, **characterised in that** a stowed position (321) of the additional vehicle driver support device (311) is arranged so as to extend at least partly behind the backrest part (303).

6. Vehicle seat (101; 201; 301; 401) according to any of claims 1 to 5, **characterised in that** the additional vehicle driver support device (111; 211; 311; 411) is arranged so as to be displaceable vertically (119; 219) and/or horizontally (345) relative to the side part (104; 204; 304; 404).

7. Vehicle seat (201; 301) according to any of claims 1 to 6, **characterised in that** the additional vehicle driver support device (211; 311) is arranged on the side part (204; 304) so as to be displaceable along a curved path (346).

8. Vehicle seat (401) according to any of claims 1 to 5, **characterised in that** the additional vehicle driver support device (411) is arranged on the side part (404) so as to be foldable and so as to rotate about a pivot axis (461).

9. Vehicle seat (101; 201; 301; 401) according to any of claims 1 to 8, **characterised in that** the additional vehicle driver support device (111; 211; 311; 411) comprises a movable partial support region (116; 216, 316; 416), the surface of which is supplemented by a stationary partial support region (117; 217; 317; 417).

10. Vehicle seat (101; 201; 301; 401) according to any of claims 1 to 9, **characterised in that** the additional vehicle driver support device (111; 211; 311; 411) comprises a plate element (118; 218; 318; 418) which can be displaced relative to the seat part (102; 202; 302; 402), the backrest part (103; 203; 303; 403) and the side part (104; 204; 304; 404) and has an additional support surface (115; 215; 315; 415).

11. Vehicle seat (101; 201; 301; 401) according to any of claims 1 to 10, **characterised in that** the additional vehicle driver support device (111; 211; 311; 411) can be arranged directly above a substantially horizontally oriented arm support surface (126; 226; 426) of the vehicle seat (101; 201; 301; 401).

12. Vehicle seat (101; 201; 301; 501) according to any of claims 1 to 11, **characterised in that** the vehicle seat (101; 201; 301; 501) comprises an actuation device (130; 230; 330; 530) for actuating the additional vehicle driver support device (111; 211; 311; 511), the actuation device (130; 230; 330; 530) being arranged on the side part (304) and/or the backrest part (103; 203; 503).

13. Commercial vehicle, in particular an agricultural commercial vehicle, comprising a vehicle seat (101; 201; 301; 401; 501) for a vehicle driver, **characterised by** a vehicle seat (101; 201; 301; 401; 501) according to any of the preceding claims.

## Revendications

1. Siège de véhicule (101 ; 201 ; 301 ; 401 ; 501) avec une partie d'assise (102 ; 202 ; 302 ; 402 ; 502), avec une partie de dossier (103 ; 203 ; 303 ; 403 ; 503) et avec une partie latérale (104; 204; 304 ; 404; 504) qui est conçue comme une partie d'accoudoir (105 ; 205 ; 305 ; 405 ; 505), pour le soutien commun d'un conducteur du véhicule dans sa position assise sur le siège de véhicule (101 ; 201 ; 301 ; 401 ; 501),
**caractérisé par**
un dispositif de soutien du conducteur supplémentaire (111 ; 211 ; 311 ; 411 ; 511), disposée sur la partie latérale (104 ; 204 ; 304 ; 404 ; 504) du siège de véhicule (101 ; 201 ; 301 ; 401 ; 501), et pouvant être disposée de manière temporaire dans une zone d'appui (110 ; 210 ; 310 ; 410 ; 510) normalement exempte de siège de véhicule, à l'aide duquel un conducteur de véhicule assis sur le siège de véhicule (101 ; 201 ; 301 ; 401 ; 501) peut être soutenu de manière supplémentaire pendant une position de travail assise orientée latéralement ou vers l'arrière, la zone d'appui (110 ; 210 ; 310 ; 410 ; 510) exempte de siège de véhicule étant, par rapport à la direction d'assise normale, excentrée sur la partie de dossier (103 ; 203 ; 303 ; 403 ; 503) et étant disposée en outre sur le côté de la partie de dossier (103 ; 203 ; 303 ; 403 ; 503) et devant la partie de dossier (103 ; 203 ; 303 ; 403 ; 503) et au-dessus de la mi-hauteur de la partie de dossier (103 ; 203 ; 303 ; 403 ; 503), et le dispositif de soutien du conducteur supplémentaire (111 ; 211 ; 311 ; 411 ; 511) s'étendant dans la direction longitudinale du véhicule comprenant une surface d'appui (115 ; 215 ; 315 ; 415 ; 515), disposée essentiellement perpendiculairement par rapport à celui-ci, pour une zone de dos et/ou d'épaule d'un conducteur de véhicule.

2. Siège de véhicule (101 ; 201 ; 301 ; 401 ; 501) selon la revendication 1
**caractérisé en ce que**
le dispositif de soutien du conducteur supplémentaire (111 ; 211 ; 311 ; 411) est fixé à la partie latérale (104 ; 204 ; 304 ; 404) avec un dispositif de déplacement (123 ; 223 ; 323 ; 423), à l'aide duquel le dispositif de soutien du conducteur supplémentaire (111 ; 211 ; 311 ; 411) est disposé de manière mobile entre une position de repos (121 ; 221 ; 321 ; 421) sur la partie latérale (104; 204; 304 ; 404) et une position d'appui supplémentaire dans la zone d'appui (110 ; 210 ; 310 ; 410) normalement exempte de siège de véhicule.

3. Siège de véhicule (101) selon la revendication 1 ou 2,
**caractérisé en ce qu'**
une position de repos (121) du dispositif de soutien du conducteur supplémentaire (111) est disposée au moins partiellement à l'intérieur de la partie latérale (104).

4. Siège de véhicule (201 ; 401) selon l'une des revendications 1 à 3,
**caractérisé en ce qu'**
une position de repos (221 ; 421) du dispositif de soutien du conducteur supplémentaire est disposée sur le côté de la partie latérale (204 ; 404) au niveau d'un côté (238 ; 438) opposé à la partie d'assise (202 ; 402) et/ou à la partie de dossier (203 ; 403).

5. Siège de véhicule (301) selon l'une des revendications 1 à 4,
**caractérisé en ce qu'**
une position de repos (321) du dispositif de soutien du conducteur supplémentaire (311) s'étend au moins jusque partiellement derrière la partie de dossier (303).

6. Siège de véhicule (101 ; 201 ; 301 ; 401) selon l'une des revendications 1 à 5,
**caractérisé en ce que**
le dispositif de soutien du conducteur supplémentaire (111 ; 211 ; 311 ; 411) est disposé de manière coulissante verticalement (119 ; 219) et/ou horizontalement (345) par rapport à la partie latérale (104 ; 204 ; 304 ; 404).

7. Siège de véhicule (201 ; 301) selon l'une des revendications 1 à 6,
**caractérisé en ce que**
le dispositif de soutien du conducteur supplémentaire (211 ; 311) est disposé sur la partie latérale (204 ; 304) de manière mobile le long d'une piste courbe (345).

8. Siège de véhicule (401) selon l'une des revendications 1 à 5,
**caractérisé en ce que**
le dispositif de soutien du conducteur supplémentaire (411) est disposé de manière rabattable sur la partie latérale (404) et rotative autour d'un axe de pivotement (461).

9. Siège de véhicule (101 ; 201 ; 301 ; 401) selon l'une des revendications 1 à 8,
**caractérisé en ce que**
le dispositif de soutien du conducteur supplémentaire (111 ; 211 ; 311 ; 411) comprend une zone d'appui partielle mobile (116 ; 216 ; 316 ; 416) qui est complétée par une zone d'appui partielle stationnaire (117 ; 217 ; 317 ; 417).

10. Siège de véhicule (101 ; 201 ; 301 ; 401) selon l'une des revendications 1 à 9,
**caractérisé en ce que**
le dispositif de soutien du conducteur supplémentaire (111 ; 211 ; 311 ; 411) comprend un élément en forme de plaque (118 ; 218 ; 318 ; 418) mobile par rapport à la partie d'assise (102 ; 202 ; 302 ; 402), à la partie de dossier (103 ; 203 ; 303 ; 403) et à la partie latérale (104 ; 204 ; 304 ; 404), avec une surface d'appui supplémentaire (115 ; 215 ; 315 ; 415).

11. Siège de véhicule (101 ; 201 ; 301 ; 401) selon l'une des revendications 1 à 10,
**caractérisé en ce que**
le dispositif de soutien du conducteur supplémentaire (111 ; 211 ; 311 ; 411) peut être disposé directement au-dessus d'une surface d'appui de bras (126 ; 226 ; 326 ; 426), orientée de manière essentiellement horizontale, du siège de véhicule (101 ; 201 ; 301 ; 401).

12. Siège de véhicule (101 ; 201 ; 301 ; 401) selon l'une des revendications 1 à 11,
**caractérisé en ce que**
le siège de véhicule (101 ; 201 ; 301 ; 501) comprend un dispositif d'actionnement (130 ; 203 ; 330 ; 530) pour l'actionnement du dispositif de soutien du conducteur supplémentaire (111 ; 211 ; 311 ; 511), le dispositif d'actionnement (130 ; 203 ; 330 ; 530) étant disposé sur la partie latérale (304) et/ou sur la partie de dossier (103 ; 203 ; 503).

13. Véhicule utilitaire, plus particulièrement véhicule utilitaire agricole, avec un siège de véhicule (101 ; 201 ; 301 ; 401 ; 501) pour un conducteur de véhicule,
**caractérisé par**
un siège de véhicule (101 ; 201 ; 301 ; 401 ; 501) selon l'une des revendications précédentes.
